# EUROPEAN PATENT APPLICATION

(11) **EP 1 392 060 A1**
(43) Date of publication of application: **25.02.2004**
(21) Application number: 02292078.9
(22) Date of filing: 21.08.2002
(51) Int. Cl.: H04N 7/16, H04N 17/00

(54) **System and method for broadcast testing**

(71) Applicant: Canal+ Technologies Société Anonyme, 75906 Paris Cedex 15 (FR)
(72) Inventor: Arques, Xavier, 75015 Paris (FR); Bezancon, Eric, 75013 Paris (FR)
(74) Representative: Santarelli

(57) **Abstract**

The present invention provides a service plan editor for creating and editing a service plan relating to a digital transmission system. The invention finds particular application in the field of testing the broadcast and use of interactive applications within an environment based on the MPEG and DVB digital broadcast standards.

## Description

This invention relates to components of a broadcast testing system in the context of a digital transmission system such as a digital broadcast system. In particular (but not exclusively), it relates to components of a system for testing the broadcast and use of interactive applications within an environment based on the MPEG and DVB digital broadcast standards.

Digital broadcast systems transmit channels to the user in digital, rather than analogue, form. The digital channels are encoded into a digital data stream at the transmitter end, and are decoded at the receiver end using a digital receiver/decoder. To allow interactivity, an uplink may be provided, either via the same medium that delivers the channels, or else via a different medium such as a telephone link. Further types of data, such as digital audio, software and interactive data can be or are also broadcast. As used herein, the term "digital broadcast system" includes for example any satellite, terrestrial, cable and other system.

The term "receiver/decoder" as used herein may connote a receiver for receiving either encoded or non-encoded signals, for example television and/or radio signals, preferably in MPEG format, which may be broadcast or transmitted by some other means. The term may also connote a decoder for decoding received signals. Embodiments of such receiver/decoders may include a decoder integral with the receiver for decoding the received signals, for example, in a "set-top box", such as a decoder functioning in combination with a physically separate receiver, or such a decoder including additional functions, such as a web browser, a video recorder, or a television.

The term "MPEG" preferably refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4, and the MPEG-4 and other contemplated MPEG standards. In the context of the present patent application, the term includes all variants, modifications or developments of MPEG formats applicable to the field of digital data transmission, including the DVB and ATSC standards.

The term "DVB" preferably refers to the DVB standards developed by the DVB Project, including the DVB Specification for Service Information (SI) in DVB systems (European Telecommunications Standards Institute (ETSI) EN300468). In the context of the present patent application, the term includes all variants, modifications or developments of DVB formats applicable to the field of digital data transmission.

The term "MPEG / DVB" preferably refers to either MPEG or DVB or both, and includes all variants, modifications or developments of MPEG or DVB formats applicable to the field of digital data transmission.

The term "markup language" preferably refers to a language used to format, arrange or encode data by adding markup to a textual representation of the data, and to metalanguages used for defining text markup. Examples of markup languages include SGML and XML, and the term "markup language" includes SGML and XML as well as all variants, modifications or developments of SGML and XML.

The term "audio/visual" as used herein preferably connotes either audio or visual matter, or a combination of the two. In the context of a broadcast signal received by a receiver/decoder, the term may encompass subtitle, teletext, synchronisation and other data transmitted in close relation to audio and video components making up a television programme.

Although the embodiments described herein are described with reference to a broadcast environment based on the MPEG and DVB standards, principles of the invention are applicable in other broadcast environments using other broadcast standards.

The term "table" preferably refers to a data structure having a fixed length header and a variable length body, and preferably refers to a data structure as commonly used in digital transmission systems, for example those based on MPEG or DVB standards.

The term "table" includes any MPEG / DVB table as defined in the relevant standards as well as other tables intended for use with MPEG / DVB based broadcast systems. Accordingly, references to MPEG / DVB tables shall be taken to include, where appropriate, proprietary / private tables which are not part of the MPEG / DVB standards but which are intended to be used within an MPEG / DVB based broadcast system.

Testing the broadcast and operation of applications for use on a receiver/decoder in a digital broadcast context involves testing both the delivery of the application to the receiver/decoder (including its constituent instruction and resource files) as well as the delivery of any information used by the application during its execution. However, carrying out such tests in a real broadcasting environment is not only likely to be complex and costly, but may also disrupt the regular service of the broadcasting environment. Testing in a partially or wholly simulated environment can therefore be beneficial.

International Patent Application Number WO 98/43165 (whose disclosure is incorporated herein by reference) discloses a system in which an application is tested by running it on a receiver/decoder-type unit under control of a workstation.

International Patent Application Number WO 01/05162 (whose disclosure is incorporated herein by reference) discloses a simulator which simulates the behaviour of a receiver/decoder, and which may be used to simulate execution of applications. In this way, the application testing process can be simplified, as no physical receiver/decoder or receiver/decoder-type unit is required.

International Patent Application Number WO 01/78412 (whose disclosure is incorporated herein by reference) describes a method of testing receiver/decoder applications using a simulated bitstream. Testing may occur either on an actual receiver/decoder or receiver/decoder-type unit or on a receiver/decoder simulator executed on a workstation or PC. Testing may be performed using a combination of simulated and real bitstream components. Thus an existing actual television broadcast may be combined with simulated broadcast of applications and application-related information. In this way, applications may be tested in an environment as close as possible to the actual environment in which they will be required to operate.

The present invention seeks to address problems identified in the prior art.

Accordingly, in a first aspect of the invention, there is provided a service plan editor for creating and editing a service plan relating to a digital transmission system, comprising: a user interface for receiving user input, the user input comprising data relating to the digital transmission system; means (preferably in the form of a processor with associated memory) for compiling the service plan from the data; and means (preferably in the form of a processor with associated memory) for outputting the service plan.

In this context, the term "digital transmission system" preferably refers both to an actual digital transmission system and to a partially or wholly simulated digital transmission system. Accordingly, any activities relating to the digital transmission system, such as transmitting, broadcasting, receiving and decoding shall preferably be taken to refer, where appropriate, to both the actual activity and simulation of that activity, for example, simulation of broadcasting, receiving or decoding.

The term "service plan" preferably refers to a description of a digital transmission system. The description preferably comprises information on the structure of the digital transmission system and may comprise information on other characteristics of the digital transmission system, for example transport stream frequencies, or on content intended for transmission on the system, for example interactive applications.

The digital transmission system may be a digital broadcast system. Preferably, the digital transmission system is a digital television system.

By providing a service plan editor, a service plan may be created which may be used as input to components of a digital transmission system or a transmission testing system. The service plan may be used to control the operation of the digital transmission system or its simulation.

Preferably, the compiling means is adapted to format the service plan in a predetermined format. This can increase the interoperability between the service plan editor and other system components.

If (as is preferred) the user interface is adapted to receive data relating to a digital transmission system having a given structure, the compiling means is preferably adapted to format the service plan in a structure related to said given structure. The structure may be similar or substantially identical to said given structure. Preferably, said given structure is hierarchical, the compiling means being adapted to format the service plan in a hierarchical structure related to said given hierarchical structure. By formatting the service plan in a structure related to the structure of the digital transmission system, it can be more easily accessed and processed.

Preferably, the compiling means comprises an encoder for encoding the service plan using a markup language. A service plan formatted in this way may be understood and modified more easily by a subsequent user of the service plan, and the service plan may be viewed and modified without using the service plan editor. Preferably, the markup language is XML or SGML. These are markup languages which are well known and for which software tools are widely and cheaply available.

If (as is preferred) the service plan editor further comprises a user interface adapted to receive data relating to a digital transmission system having a given structure, the user interface is preferably adapted to arrange the data in a structure related to said given structure for presentation to a user. Preferably, the structure is similar or substantially identical to said given structure. Arranging the data in this way can make the user interface easier and more efficient to use. Preferably, said given structure is hierarchical, the user interface comprising a hierarchical interface element adapted to arrange the data in a hierarchical structure related to said given hierarchical structure for presentation to a user. Arranging the data in this way can make the user interface easier and more efficient to use.

If (as is preferred) the user interface is adapted to receive data relating to a digital transmission system, the digital transmission system having a given structure and being intended for the transmission of content, then the user interface is preferably adapted to generate a first view for receiving data relating to said given structure and a second view for receiving data relating to the content. Separating the different kinds of information in the user interface can improve clarity and user-friendliness.

Preferably, the user interface comprises default or fixed data for presentation to a user, the user interface being adapted to allow user selection of such data for inclusion in the service plan. This can improve user-friendliness. Preferably, the default or fixed data comprises constants or other standard values defined by relevant transmission standards, for example MPEG or DVB standards. By providing such constants and standard values in the user interface, certain errors in the service plan can be avoided where compliance with transmission standards is required.

Preferably, the service plan editor further comprises means (preferably in the form of a processor with associated memory and/or a permanent storage device such as a hard disk drive) for storing the service plan. This enables the service plan to be used within a digital transmission system or transmission testing system.

In a further aspect of the invention, there is provided a transmission control data generator, comprising means (preferably in the form of a processor with associated memory) for receiving a service plan relating to a digital transmission system; and means (preferably in the form of a processor with associated memory) for generating transmission control data from the service plan.

The term "transmission control data" preferably refers to any data which is not part of the transmitted content of the digital transmission system. It preferably refers to data used for control purposes in a digital transmission system, for example for controlling functions of a receiver/decoder and for enabling a receiver/decoder to receive and decode transmitted content such as television programmes. The term preferably refers also (but not exclusively) to MPEG Program Specific Information (PSI) tables, DVB Service Information (SI) tables, MPEG private tables and other tables defined by the MPEG, DVB or related standards or proprietary tables designed for use in MPEG /DVB based digital transmission systems. Transmission control data may be used either in live transmission or simulated transmission environments.

By providing a transmission control data generator which generates control data from a service plan, a digital transmission system may be more efficiently controlled.

Preferably, the transmission control data generator is adapted to generate transmission control data for use in transmission testing. By using transmission control data generated from a service plan, transmission testing can be carried out in a more accurate and reliable way, and the testing process can be made more efficient.

Preferably, the generating means is adapted to generate the transmission control data in the form of a data structure. This enables further processing and use of the transmission control data. Preferably, the data structure is a table. This is a flexible data structure and can allow for greater flexibility in transmitting control data. Using such a flexible data structure can also enable available bandwidth in a transmission system to be used more efficiently.

Preferably, the table is an MPEG / DVB table. This can allow the transmission control data generator to be used for generating transmission control data for use with a digital transmission system based on the MPEG or DVB standards.

Preferably, the generating means is adapted to generate the transmission control data in the form of a set of such data structures. This may simplify the generation of large amounts of transmission control data. Preferably, the generating means is adapted to generate the transmission control data in the form of a suite of such data structures, the suite being a substantially complete implementation of the service plan. In this way, transmission control data can be generated more quickly and efficiently. Where the transmission control data is for use in transmission testing, a complete test environment can be generated in an efficient manner.

Preferably, the receiving means comprises a user interface. This can enable the service plan to be created interactively in a more user-friendly way and may remove the need for having a previously created service plan. Alternatively or in addition, the receiving means may comprise a service plan editor as aforesaid.

Preferably, the generating means comprises an encoder adapted to encode the transmission control data in a directly usable format. Directly usable preferably means directly usable for transmission in a digital transmission system or for transmission testing. This can avoid the need for further processing of the transmission control data. Preferably, the encoder is adapted to encode the transmission control data in a format suitable for insertion into a transport stream.

The term "transport stream" preferably refers to a bit stream used to transmit content in a digital transmission system, and preferably refers to a transport stream as used in digital transmission systems based on the MPEG, DVB, and related or similar digital transmission standards.

In this way, a transport stream can be directly created from the transmission control data without requiring further processing.

Alternatively or in addition, the generating means may comprise an encoder adapted to encode the transmission control data in an intermediate format suitable for further processing. This may be useful where further processing of the control data is required, and may also allow for the transmission control data to be inspected and directly modified without the need for re-generation.

Preferably, the encoder is adapted to encode the transmission control data using a markup language. This can enable inspection or modification of the generated transmission control data by, for example, a human user of the transmission control data generator. This may provide for greater flexibility and can be of particular benefit where the transmission control data generator is used to create a test environment for transmission testing. Preferably, the markup language is XML or SGML. These markup languages are widely known, and software tools for processing and manipulating data encoded using XML and SGML are widely and cheaply available.

Preferably, the generating means comprises a converter for converting transmission control data encoded in an intermediate format into a directly usable format. Alternatively or in addition, the generating means may comprise a converter for converting transmission control data encoded using a markup language into transmission control data suitable for insertion into a transport stream. This can allow the transmission control information to be inspected or modified by a human user whilst still allowing for generation of directly usable control data. This in turn can provide greater flexibility in the control data generation process.

Preferably, the transmission control data generator further comprises means (preferably in the form of a processor with associated memory and/or a permanent storage device such as a hard disk drive) for storing information relating to the structure or configuration of the digital transmission system. This may improve interoperability with other components of a digital transmission system or transmission testing system.

In the case where the transmission control data generator operates within a Microsoft Windows(TM)-based environment, the storing means may comprise a Windows(TM) Registry. Windows(TM) Registries are hierarchical by nature and digital transmission systems, in particular digital broadcast systems, may be represented as a hierarchy of networks, transport streams, services and so on. Windows(TM) Registries can also be accessed easily by other applications executing on the system, for example a broadcast simulation application. For these reasons a Windows(TM) Registry can be well suited for storing structural / configuration information for the digital transmission system.

In a further aspect of the invention, there is provided a converter comprising means (preferably in the form of a processor with associated memory) for converting transmission control data relating to a digital transmission system in a first format into transmission control data in a second format.

This can enable more efficient exchange of the transmission control data between different components of a digital transmission system.

Preferably, the converter is adapted to convert transmission control data for use in transmission testing. This may enable more efficient exchange of the transmission control data between different components of a transmission testing system.

Preferably, the first format uses a markup language. Such a format can be more easily manipulated, especially by a human user. Preferably, the markup language is XML or SGML. These markup languages are widely known, and software tools for processing and manipulating data encoded using XML and SGML are widely and cheaply available.

Preferably, the second format is a directly usable format. This can enable the converted transmission control data to be directly used in a digital transmission system or transmission testing system.

Preferably, the converting means comprises: means (preferably in the form of a processor with associated memory) for receiving transmission control data in the first format; and means (preferably in the form of a processor with associated memory) for generating transmission control data in the second format. Preferably, the second format is a data structure. This can improve interoperability with other components of a digital transmission system or transmission testing system.

Preferably, the receiving means is adapted to receive a size specifier and a value specifier; and the generating means is adapted to generate a field in the data structure having a size specified by the size specifier and a value specified by the value specifier. This can allow for greater control over the generation of the data structure and may enable the data structure to be more accurately defined. For the same reason, the receiving means may further be adapted to receive a type specifier, the generating means being adapted to generate the field in dependence on the type specifier.

Preferably, the data structure is a table. The table may be an MPEG / DVB table. This can allow the converter to be used for generating transmission control data for use with a digital transmission system which uses tables, for example one based on the MPEG or DVB standards. Where the transmission control data is being generated for a digital transmission system which uses tables having the form of one or more table sections (for example, an MPEG or DVB based system), the generating means is preferably adapted to generate the transmission control data in the form of a table having at least one table section.

Preferably, the converter further comprises means (preferably in the form of a processor with associated memory) for receiving data defining the mapping of a table into at least one table section, the generating means being adapted to generate said at least one table section in dependence on the data. This can provide greater control over generation of the table sections. For the same reason, the data may comprise a parameter defining a maximum section length for a table section; the generating means being adapted to generate said at least one table section in dependence on the size of the table and the maximum section length defined by the parameter.

In a further aspect of the invention, there is provided a data file comprising transmission control data for a digital transmission system marked up using a markup language.

Transmission control data formatted in this way may be exchanged more easily between components of a digital transmission system or a transmission testing system, and may be viewed and modified by a human user. Preferably, the markup language is XML or SGML, as these markup languages are widely known and software for processing XML or SGML - formatted data is widely and cheaply available.

Preferably, the data file comprises an element representing a field in a transmission control table.

The transmission control table is preferably a table as defined above, for example an MPEG or DVB table, holding transmission control data. By including an element representing a field in the transmission control table, the data file may be used to model a transmission control table more accurately and can allow for more efficient conversion of the data file into such a table.

Typically, the field has a type, a size and a value; and the element preferably comprises at least one attribute, each respective attribute representing one of the type of the field, the size of the field and the value of the field. This can provide for a more accurate representation of the field. Preferably, the data file further comprises an element representing a group of at least one field in a transmission control table. In this way, a transmission control table can be represented in the data file in a more structured way, which can make later processing or conversion easier and more efficient. For the same reason, the data file may further comprise an element representing a transmission control table, the element preferably comprising an attribute holding a table identifier of the transmission control table.

In a further aspect of the invention, there is provided a document type definition comprising a definition of a document type for representing a transmission control table using a markup language.

Such a document type definition may be used in conjunction with a document representing a transmission control table. The document may, for example, be a data file as aforesaid. The structure of the transmission control table may then be defined in the document type definition, with the document defining only its content. This can remove the need for re-defining the structure of a transmission control table every time a table having that structure is defined in a document.

The document type definition is preferably designed for use with a data file as aforesaid. For the reasons given there, the document type definition preferably comprises a definition of an element representing a field in the transmission control table. Typically, the field has a type, a size and a value; and the element definition preferably comprises at least one definition of an attribute, each respective attribute representing one of the type of the field, the size of the field and the value of the field. The document type definition may further comprise a definition of an element representing a group of at least one field in the transmission control table; and it may comprise a definition of an element representing the transmission control table, said element definition preferably comprising a definition of an attribute for holding a table identifier of the transmission control table.

In a further aspect of the invention, there is provided a data file as aforesaid, further comprising a document type definition as aforesaid or a reference to such a document type definition.

In a further aspect of the invention, there is provided a converter as aforesaid, wherein the first format is a format for a data file as aforesaid. Preferably, the converter further comprises means (preferably in the form of a processor with associated memory) for receiving a data file as aforesaid or a document type definition as aforesaid.

In a further aspect of the invention, there is provided a transmission control data generator as aforesaid, wherein the encoder is adapted to create a data file as aforesaid. Preferably, the transmission control data generator further comprises a converter as aforesaid.

In a further aspect of the invention, there is provided a signal tangibly embodying a data file as aforesaid or a document type definition as aforesaid.

In a further aspect of the invention, there is provided a computer-readable medium having stored thereon a data file as aforesaid, a document type definition as aforesaid or a signal as aforesaid.

In a further aspect of the invention, there is provided a transmission testing system, comprising means for receiving a service plan relating to a digital transmission system; and means for generating transmission control data from the service plan.

Preferably, the transmission testing system is a broadcast testing system or an application broadcast testing system.

Preferably, the transmission testing system comprises a transmission control data generator as aforesaid. The transmission testing system may further comprise a service plan editor as aforesaid and/or a converter as aforesaid.

Preferably, the transmission testing system further comprises a transport stream generator adapted to generate a transport stream incorporating the transmission control data generated by the transmission control data generator. This can enable more accurate testing as receiving and decoding of the transport stream may be simulated.

Preferably, the transmission testing system further comprises means (preferably in the form of a processor with associated memory) for receiving application information relating to an application to be transmitted, wherein the transport stream generator is adapted to add the application information or the application to the transport stream. Preferably the application information comprises an application file forming part of the application or a specifier specifying the location of such an application file. This can enable application broadcast to be tested.

In a further aspect of the invention, there is provided a method of creating or editing a service plan relating to a digital transmission system, comprising the steps of: receiving user input comprising data relating to the digital transmission system; compiling the service plan from the data; and outputting the service plan.

Preferably, compiling the service plan comprises formatting the service plan in a predetermined format.

Preferably, the method comprises receiving data relating to a digital transmission system having a given structure, and compiling the service plan comprises formatting the service plan in a structure related to said given structure. Preferably, said given structure is hierarchical, and compiling the service plan comprises formatting the service plan in a hierarchical structure related to said given hierarchical structure.

Preferably, compiling the service plan comprises encoding the service plan using a markup language.

Preferably, the method comprises receiving data relating to a digital transmission system having a given structure, and arranging the data in a structure related to said given structure for presentation to a user. Preferably, said given structure is hierarchical, and the method comprises arranging the data in a hierarchical structure related to said given hierarchical structure for presentation to a user.

Preferably, the method comprises receiving data relating to a digital transmission system, the digital transmission system having a given structure and being intended for the transmission of content; and generating a first view for receiving data relating to said given structure and a second view for receiving data relating to the content.

Preferably, the method comprises presenting default or fixed data to a user, and allowing user selection of such data for inclusion in the service plan.

Preferably, the method further comprises storing the service plan.

In a further aspect of the invention, there is provided a method of generating transmission control data, comprising receiving a service plan relating to a digital transmission system; and generating transmission control data from the service plan.

Preferably, the method comprises generating transmission control data for use in transmission testing.

Preferably, generating transmission control data comprises generating the transmission control data in the form of a data structure. Preferably, the data structure is a table.

Preferably, generating transmission control data comprises generating the transmission control data in the form of a set of such data structures. Alternatively or in addition, generating transmission control data may comprise generating the transmission control data in the form of a suite of such data structures, the suite being a substantially complete implementation of the service plan.

Preferably, receiving a service plan comprises receiving user input. Alternatively or in addition, receiving a service plan may comprise performing a method of creating or editing a service plan as aforesaid.

Preferably, generating transmission control data comprises encoding the transmission control data in a directly usable format, preferably in a format suitable for insertion into a transport stream.

Alternatively or in addition, generating transmission control data comprises encoding transmission control data in an intermediate format suitable for further processing. Preferably generating transmission control data comprises encoding the transmission control data using a markup language.

Generating transmission control data may further comprise converting transmission control data encoded in an intermediate format into a directly usable format. Preferably, generating transmission control data comprises converting transmission control data encoded using a markup language into transmission control data suitable for insertion into a transport stream.

Preferably, the method further comprises storing information relating to the structure or configuration of the digital transmission system, preferably in a Windows(TM) Registry.

In a further aspect of the invention, there is provided a method of generating transmission control data relating to a digital transmission system, comprising converting transmission control data in a first format into transmission control data in a second format. Preferably, the method comprises converting transmission control data for use in transmission testing.

Preferably, the first format uses a markup language. Preferably, the second format is a directly usable format.

The method preferably further comprises: receiving transmission control data in the first format; and generating transmission control data in the second format. Preferably, the second format is a data structure. Preferably, the method comprises receiving a size specifier and a value specifier; and generating a field in the data structure having a size specified by the size specifier and a value specified by the value specifier. The method may further comprise receiving a type specifier, and generating the field in dependence on the type specifier.

Preferably, the data structure is a table. Preferably, the method comprises generating the transmission control data in the form of a table having at least one table section.

The method may further comprise receiving data defining the mapping of a table into at least one table section, and generating said at least one table section in dependence on the data. Preferably, the data comprises a parameter defining a maximum section length for a table section, and the method comprises generating said at least one table section in dependence on the size of the table and the maximum section length defined by the parameter.

Preferably, the method comprises receiving a data file as aforesaid or a document type definition as aforesaid. If (as is preferred), both the data file and the document type definition are received, the method preferably further comprises parsing the data file and the document type definition. If (as is preferred), the data file comprises an XML or SGML document, and the document type definition is a corresponding XML or SGML document type definition, the method may also comprise validating the document with respect to the document type definition.

In a further aspect of the invention, there is provided a method of generating transmission control data as aforesaid, further comprising creating a data file as aforesaid.

In a further aspect of the invention, there is provided a method of transmission testing, comprising receiving a service plan relating to a digital transmission system; and generating transmission control data from the service plan.

Preferably, the method comprises performing a method of generating transmission control data as aforesaid. The method may further comprise performing a method of creating or editing a service plan as aforesaid.

Preferably, the method further comprises generating a transport stream incorporating the transmission control data generated. Preferably, the method further comprises receiving application information relating to an application to be transmitted, and adding the application information and/or the application to the transport stream. The application information preferably comprises an application file forming part of the application or a specifier specifying the location of such an application file.

In a further aspect of the invention, there is provided a computer program product comprising: a service plan editor as aforesaid, a transmission control data generator as aforesaid, a converter as aforesaid, a transmission testing system as aforesaid, a data file as aforesaid and/or a document type definition as aforesaid.

There are also provided a computer program product adapted to carry out any method as described herein, a computer readable medium having stored thereon a computer program product as described herein, a signal tangibly embodying a computer program product as described herein and a method of transmitting a signal, wherein the signal is as described herein.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

The invention extends to methods and/or apparatus substantially as herein described with reference to the accompanying drawings; and to a service plan editor, transmission control data generator, converter, transmission testing system, data file and/or document type definition substantially as herein described with reference to the accompanying drawings.

Any feature in one aspect of the invention may be applied to other aspects of the invention, in any appropriate combination. In particular, method aspects may be applied to apparatus aspects, and vice versa.

Furthermore, features implemented in hardware may generally be implemented in software, and vice versa. Any reference to software and hardware features herein should be construed accordingly.

Preferred features of the present invention will now be described, purely by way of example, with reference to the accompanying drawings, in which:-
Figure 1 is an overview of a satellite digital television system;
Figure 2 is an overview of a cable digital television system;
Figure 3 is an overall system view, with the head-end shown in more detail;
Figure 4 is a schematic of the component architecture of the receiver/decoder;
Figure 5 is a diagram of the software architecture of the receiver/decoder;
Figure 6 is a diagram showing the top half of Figure 5 in more detail;
Figure 7 is a diagram showing the bottom half of Figure 5 in more detail;
Figure 8 is a diagram showing an alternative embodiment of the bottom half of Figure 5;
Figure 9 is an overview of a broadcast testing system;
Figure 10 is a diagram of a service plan for several broadcast networks;
Figure 11 is a diagram of components of a broadcast testing system;
Figure 12A is a diagram of the service plan editor;
Figure 12B is schematic of a user interface for the service plan editor;
Figure 12C is an example screen showing part of the user interface;
Figure 13 is a diagram showing the functioning of the service plan generator;
Figure 14 is a diagram of the table generator; and
Figure 15 is an example object tree for an XML table document.

### System overview

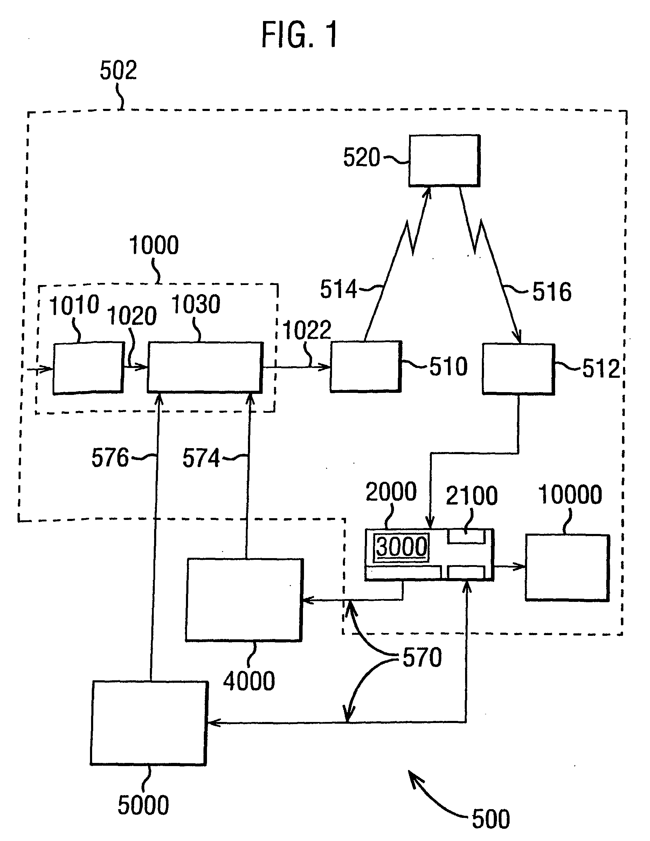

An overview of a digital television system 500 is shown in Figure 1. As will be discussed below, the system 500 comprises a broadcast centre 1000, a receiver/decoder 2000, a software/hardware architecture 3000 of the receiver/decoder, an interactive system 4000, and a conditional access system 5000, as will all be discussed below.

The system 500 includes a mostly conventional digital television system 502 that uses the known MPEG-2 compression system to transmit compressed digital signals. In more detail, MPEG-2 compressor 1010 in a broadcast centre 1000 receives a digital signal stream (typically a stream of video signals). The compressor 1010 is connected by linkage 1020 to a multiplexer and scrambler 1030.

The multiplexer 1030 receives a plurality of further input signals, assembles the transport stream and transmits compressed digital signals to a transmitter 510 of the broadcast centre via linkage 1022, which can of course take a wide variety of forms including telecommunications links. The transmitter 510 transmits electromagnetic signals via uplink 514 towards a satellite transponder 520, where they are electronically processed and broadcast via notional downlink 516 to earth receiver 512, conventionally in the form of a dish owned or rented by the end user. Other transport channels for transmission of the data are of course possible, such as terrestrial broadcast, cable transmission, combined satellite/cable links, telephone networks etc.

The signals received by receiver 512 are transmitted to an integrated receiver/decoder 2000 owned or rented by the end user and connected to the end user's television set 10000. The receiver/decoder 2000 decodes the compressed MPEG-2 signal into a television signal for the television set 10000. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In the receiver/decoder 2000 a hard disk 2100 is provided, on which audiovisual and other data can be stored. This allows advanced recording and playback facilities for programmes received by the receiver/decoder, and also allows large amounts of other types of data, such as electronic programme guide data, to be stored in the receiver/decoder.

A content management and protection system (CMPS) 2300 (not shown) in the receiver/decoder provides the ability securely and flexibly to control the recording and playback of data on the hard disk 2100 (or other storage device).

In a multichannel system, the multiplexer 1030 handles audio and video information received from a number of parallel sources and interacts with the transmitter 510 to broadcast the information along a corresponding number of channels. In addition to audiovisual information, messages or applications or any other sort of digital data may be introduced in some or all of these channels interlaced with the transmitted digital audio and video information.

An interactive system 4000 is connected to the multiplexer 1030 and the receiver/decoder 2000, and is located partly in the broadcast centre and partly in the receiver/decoder. It enables the end user to interact with various applications via a back channel 570. The back channel may be, for example a Public Switched Telephone Network (PSTN) channel (for example, a modemmed back channel) or an Out of Band (OOB) channel.

A conditional access system 5000, also connected to the multiplexer 1030 and the receiver/decoder 2000 and again located partly in the broadcast centre and partly in the receiver/decoder, enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2000. Using the receiver/decoder 2000 and smartcard, the end user may purchase commercial offers in either a subscription mode or a pay-per-view mode. Typically this is achieved using the back channel 570 which is used by the interactive system 4000.

As mentioned above, programmes transmitted by the system are scrambled at the multiplexer 1030, the conditions and encryption keys applied to a given transmission being determined by the access control system 5000. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 2000 having access to an equivalent to the exploitation key stored on a smartcard inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

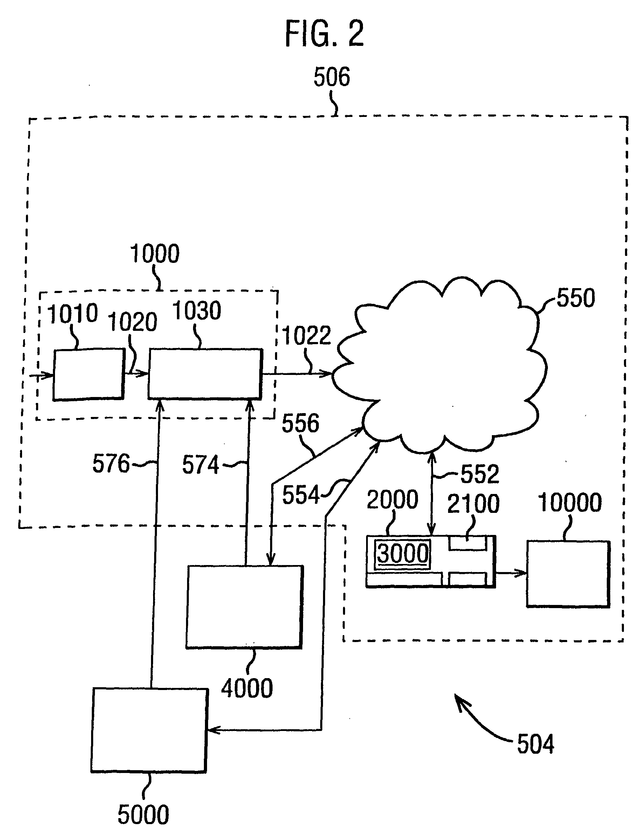

Figure 2 illustrates an alternative embodiment of a digital television system 504, utilising a cable network as the broadcast medium for the compressed digital signals. In this figure, like parts are indicated with like numerals.

The satellite transponder and transmitting and receiving stations are replaced by a cable network 550. Additionally, in this particular embodiment, the modemmed back channel between the receiver/decoder 2000 and the interactive system 4000 and conditional access system 5000 is removed, replaced by linkages 554, 556 between the cable network 550 and the conditional access system 5000 and interactive system 4000 respectively. The receiver/decoder 2000 thus communicates with the other systems via the cable network 550, utilising a cable modem or other means to allow it to send and receive data via the same link as it receives data from the broadcast centre.

The cable network 550 may be any form of wide area network (WAN), such as a dedicated connection, the internet, local cable distribution network, wireless connection, or any combination of the above. In the present embodiment, the hybrid fibre coax (HFC) network is used. It is appreciated that the various means of communication between the receiver/decoder 2000 and the other components of the television system are interchangeable.

### Conditional access system

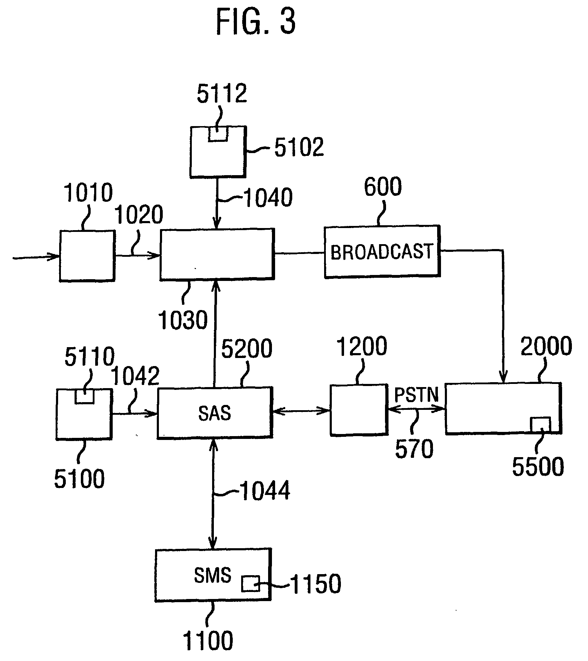

With reference to Figure 3, in overview the conditional access system 5000 includes a Subscriber Authorization System (SAS) 5200. The SAS 5200 is connected to one or more Subscriber Management Systems (SMS) 1100, one SMS for each broadcast supplier, by a link 1044, which may be a TCP-IP link or other type of link. Alternatively, one SMS could be shared between two commercial operators, or one operator could use two SMSs, and so on.

First encrypting units in the form of ciphering units 5100 utilising "mother" smartcards 5110 are connected to the SAS by linkage 1042. Second encrypting units again in the form of ciphering units 5102 utilising mother smartcards 5112 are connected to the multiplexer 1030 by linkage 1040. The receiver/decoder 2000 receives a "daughter" smartcard 5500. The receiver/decoder is connected directly to the SAS 5200 via communications servers 1200 and the modemmed back channel 570. The SAS sends amongst other things subscription rights to the daughter smartcard on request.

In variants of the preferred embodiment, internet or cable connections either complement or replace the PSTN 570 and communications servers 1200.

The smartcards contain confidential information from one or more commercial operators. The "mother" smartcard encrypts different kinds of messages and the "daughter" smartcards decrypt the messages, if they have the rights to do so.

With reference to Figure 3, in the broadcast centre, the digital video signal is first compressed (or bit rate reduced), using the MPEG-2 compressor 1010. This compressed signal is then transmitted to the multiplexer and scrambler 1030 in order to be multiplexed with other data, such as other compressed data.

The scrambler generates a control word used in the scrambling process and included in the MPEG-2 stream in the multiplexer 1030. The control word is generated internally and enables the end user's integrated receiver/decoder 2000 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the Pay Per View mode, the end user is provided with the capability to purchase events as he wishes.

Both the control word and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 5102 via the linkage 1040. In this unit, an ECM is generated, encrypted and transmitted on to the multiplexer and scrambler 1030.

Each service broadcast by a broadcast supplier in a data stream comprises a number of distinct components; for example a television programme includes a video component, an audio component, a sub-title component and so on. Each of these components of a service is individually scrambled and encrypted for subsequent broadcast. In respect of each scrambled component of the service, a separate ECM is required.

The multiplexer 1030 receives electrical signals comprising encrypted EMMs from the SAS 5200, encrypted ECMs from the second encrypting unit 5102 and compressed programmes from the compressor 1010. The multiplexer 1030 scrambles the programmes and transmits the scrambled programmes, the encrypted EMMs and the encrypted ECMs as electric signals to broadcast system 600, which may be for example a satellite system as shown in Figure 1, or other broadcast system. The receiver/decoder 2000 demultiplexes the signals to obtain scrambled programmes with encrypted EMMs and encrypted ECMs.

The receiver/decoder receives the broadcast signal and extracts the MPEG-2 data stream. If a programme is scrambled, the receiver/decoder 2000 extracts the corresponding ECM from the MPEG-2 stream and passes the ECM to the "daughter" smartcard 5500 of the end user. This slots into a housing in the receiver/decoder 2000. The daughter smartcard 5500 controls whether the end user has the right to decrypt the ECM and to access the programme. If not, a negative status is passed to the receiver/decoder 2000 to indicate that the programme cannot be descrambled. If the end user does have the rights, the ECM is decrypted and the control word extracted. The decoder 2000 can then descramble the programme using this control word. The MPEG-2 stream is decompressed and translated into a video signal for onward transmission to television set 10000.

If the programme is not scrambled, no ECM will have been transmitted with the MPEG-2 stream and the receiver/decoder 2000 decompresses the data and transforms the signal into a video signal for transmission to television set 10000.

The subscriber management system (SMS) 1100 includes a database 1150 which manages, amongst others, all of the end user files, commercial offers (such as tariffs and promotions), subscriptions, PPV details, and data regarding end user consumption and authorization. The SMS may be physically remote from the SAS.

The SMS 1100 transmits messages to the SAS 5200 which imply modifications to or creations of Entitlement Management Messages (EMMs) to be transmitted to end users. The SMS 1100 also transmits messages to the SAS 5200 which imply no modifications or creations of EMMs but imply only a change in an end user's state (relating to the authorization granted to the end user when ordering products or to the amount that the end user will be charged). The SAS 5200 also sends messages (typically requesting information such as call-back information or billing information) to the SMS 1100, so that it will be apparent that communication between the two is two-way.

### Receiver/decoder

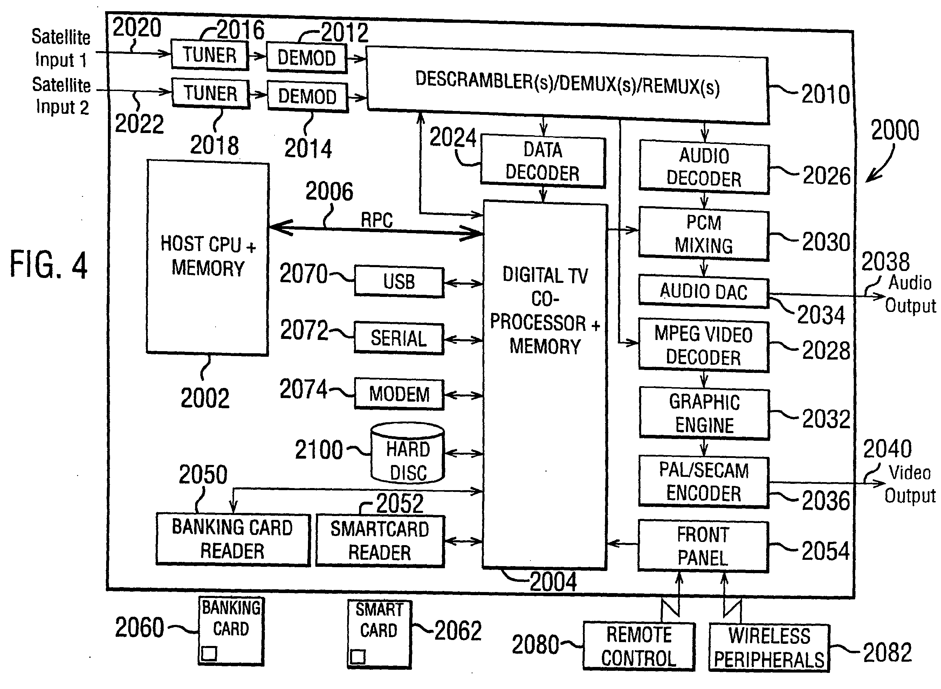

Referring to Figure 4, the various elements of receiver/decoder 2000 will now be described in terms of functional blocks.

The receiver/decoder 2000, which may be, for example, a digital set-top box (DSTB), comprises a central host processor 2002 and a digital TV coprocessor 2004, both having associated memory elements (not shown) and joined by a coprocessor bus 2006. The coprocessor 2004 is adapted to receive input data from a USB interface 2070, a serial interface 2072, a parallel interface (not shown), a modem 2074 (connected to the modem back channel 570 of Fig. 1), and switch contacts on the front panel 2054 of the decoder.

The receiver/decoder is additionally adapted to receive inputs from an infra-red remote control 2080 (and optionally from other wireless peripherals 2082 such as Bluetooth-enabled devices) and also possesses two smartcard readers 2050, 2052 adapted to read bank and subscription smartcards 2060, 2062 respectively. The subscription smartcard reader 2052 engages with an inserted subscription card 2062 and with a conditional access unit (not shown) to supply the necessary control word to a demultiplexer/descrambler/remultiplexer unit 2010 to enable the encrypted broadcast signal to be descrambled. The decoder also includes a conventional tuner 2016 and demodulator 2012 to receive and demodulate the satellite transmission before being filtered and demultiplexed by the demodulator/descrambler unit 2010. A second tuner 2018 and second demodulator 2014 are also provided, to allow, amongst other things, a second channel to be received and decoded in parallel with the first.

A hard disk 2100 is also provided, allowing storage of programme and application data received and generated by the receiver/decoder. In conjunction with the two tuners 2016, 2018, two demodulators 2012, 2014, the descrambler/demultiplexer/remultiplexer 2010, and the data decoder 2024 and audio decoder 2026, advanced recording and playback features are provided, allowing simultaneous recordings of one or more programmes while a further programme is being viewed, and more general transfers to and from the hard disk to and from the display devices and/or inputs and outputs, all occurring in parallel.

The audio output 2038 and video output 2040 in the receiver/decoder are fed by the PCM mixer 2030 and audio DAC 2034, and the MPEG video decoder 2028, graphic engine 2032 and PAL/SECAM encoder 2036 respectively. Alternative or complementary outputs may of course be provided.

As used in this description, an application is preferably a piece of computer code for controlling high level functions of preferably the receiver/decoder 2000. For example, when the end user positions the focus of remote control 2080 on a button object seen on the screen of the television set (not shown) and presses a validation key, the instruction sequence associated with the button is run. Applications and the associated middleware are executed by the host processor 2002, with remote procedure calls (RPCs) being made to the digital TV coprocessor 2004 across the coprocessor bus 2006 as and when required.

An interactive application proposes menus and executes commands at the request of the end user and provides data related to the purpose of the application. Applications may be either resident applications, that is, stored in the ROM (or FLASH or other non-volatile memory) of the receiver/decoder 2000, or broadcast and downloaded into the RAM, FLASH memory or hard disk of the receiver/decoder 2000.

Applications are stored in memory locations in the receiver/decoder 2000 and represented as resource files. The resource files comprise graphic object description unit files, variables block unit files, instruction sequence files, application files and data files.

The receiver/decoder contains memory (not shown) divided into at least one RAM volume, a FLASH volume and at least one ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

### Architecture of receiver/decoder

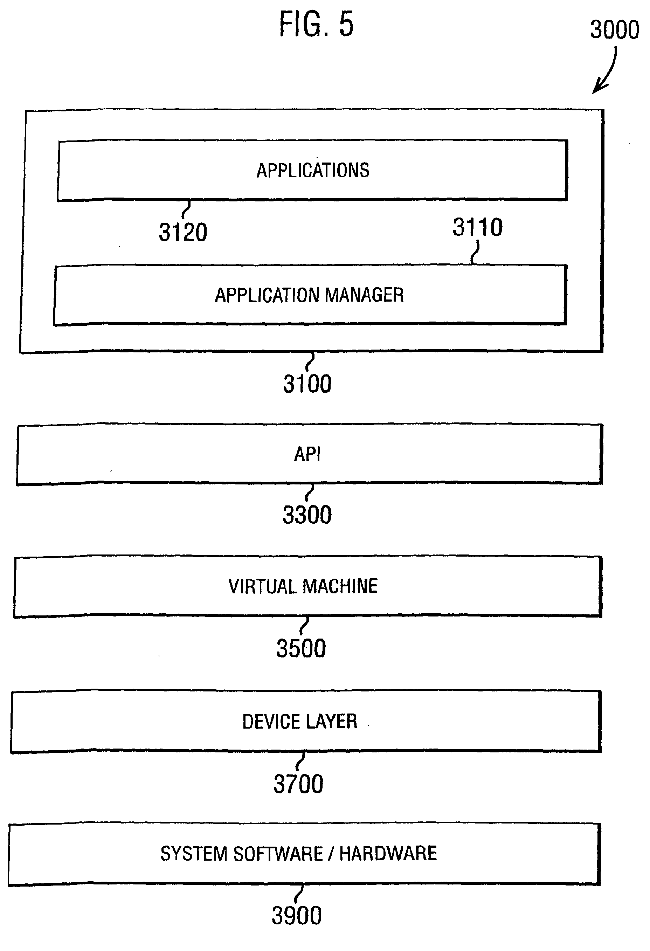

With reference to Figure 5, the software/hardware architecture 3000 of the receiver/decoder contains five software layers, organized so that the software can be implemented in any receiver/decoder and with any operating system. The various software layers are application layer 3100, application programming interface (API) layer 3300, virtual machine layer 3500, device interface layer 3700 (often abbreviated just to 'device layer') and system software/hardware layer 3900.

The application layer 3100 encompasses applications 3120 that are either resident in or downloaded to the receiver/decoder. They may be interactive applications used by customers, written in, for example, Java, HTML, MHEG-5 or other languages, or they may be applications used by the receiver/decoder for other purposes, for example for running such interactive applications. This layer is based on a set of open Application Programming Interfaces (APIs) provided by the Virtual Machine layer. This system allows applications to be downloaded to the hard disk, flash memory or RAM memory in the receiver/decoder on-the-fly or on demand. The application code can be transmitted in compressed or uncompressed format using protocols such as Data Storage Media Command and Control (DSMCC), Network File Server (NFS) or other protocols.

The API layer 3300 provides high-level utilities for interactive application development. It includes several packages that make up this high-level API. The packages provide all the functionality necessary to run interactive applications. The packages are accessible by the applications.

In a preferred embodiment the API is adapted for applications written in the Java, PanTalk or such similar programming languages. Furthermore, it can facilitate the interpretation of HTML and other formats, such as MHEG-5. Besides these features, it also includes other packages and service modules that are detachable and extensible as requirements dictate.

The virtual machine layer 3500 is composed of language interpreters and various modules and systems. This layer, managed by a kernel 3650 (not shown), consists of everything necessary to receive and execute interactive applications in the receiver/decoder.

The device interface layer 3700 includes a Device Manager and software devices (generally referred to herein as just 'devices'). Devices are software modules which consist of the logical resources necessary for management of external events and physical interfaces. The device interface layer, under the control of the Device Manager, manages communication channels between drivers and applications and provides enhanced error exception checking. Some examples of managed (hardware) devices are: card readers 3722 (not shown), modems 3730 (not shown), network 3732 (not shown), PCMCIA (Personal Computer Memory Card International Association), LED display and so on. Programmers do not have to deal with this layer directly, since the API layer controls the devices from above.

The system software/hardware layer 3900 is provided by the manufacturer of the receiver/decoder. Because of the modularity of the system and because services supplied by the higher-level operating system (such as event scheduling and memory management) are part of the virtual machine and kernel, the higher layers are not tied to a particular real-time operating system (RTOS) or to a particular processor.

Typically the virtual machine layer 3500, occasionally in combination with the device interface layer 3700 and/or API 3300, is referred to as the 'middleware' of the receiver/decoder.

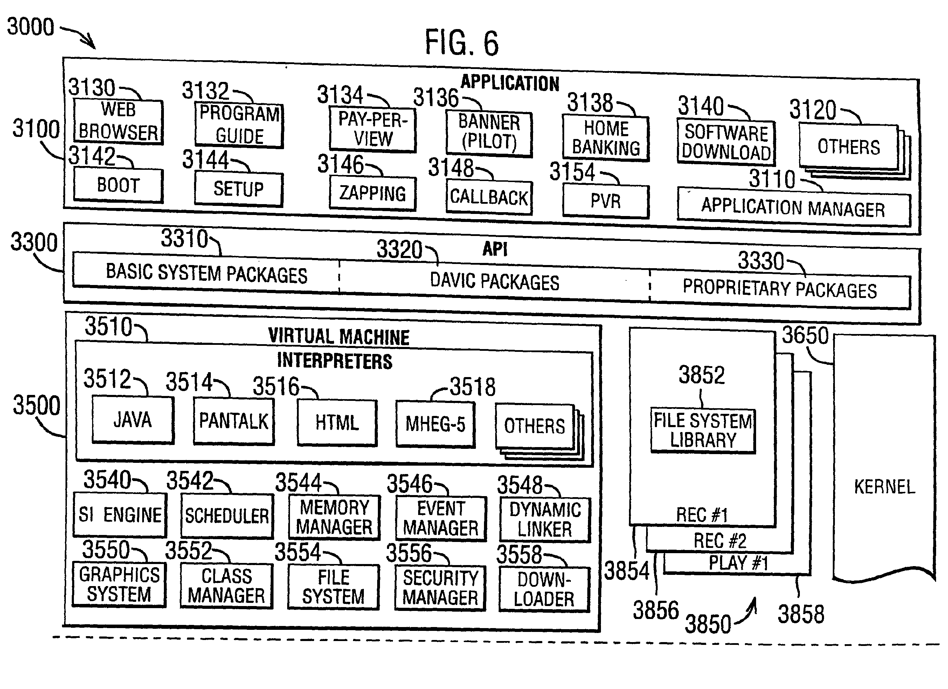

With reference to Figure 6 the software architecture of the receiver/decoder 3000 corresponding to the top half of Figure 5 (comprising the application layer 3100, API layer 3300 and virtual machine layer 3500) will now be described in more detail.

Interactive applications are applications that the user interacts with, for example, to obtain products and services, such as electronic program guides, telebanking applications and games.

There are two types of application in the application layer 3100, plus the Application Manager 3110. There are interactive applications such as a Web Browser 3130 which can be added at any time as long as they conform to the API 3300, and there are resident applications which manage and support the interactive applications. The resident applications are substantially permanent and include the following:
- Boot. The Boot application 3142 is the first application launched when the receiver/decoder is powered on. The Boot application first starts the Application Manager 3110, and then starts the "Manager" software modules in the virtual machine 3500, such as the Memory Manager 3544 and the Event Manager 3546.
- Application Manager. The Application Manager 3110 manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application 3144 is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application 3146 is used to change channels using the Program-up, Program-down and numeric keys. When another form of zapping is used, for example, through a banner (pilot) application, the Zapping application is stopped.
- Callback. The Callback application 3148 is used to extract the values of various parameters stored in the receiver/decoder memory and return these values to the commercial operator via modemmed back channel 1070 (not shown), or by other means.

Other applications in the application layer 3100 include a program guide application 3132, a pay-per-view application 3134, a banner (pilot) application 3136, a home banking application 3138, a software download application 3140 and a PVR (personal video recorder) application 3154 (see below).

As noted above, the Application Programming Interface (API) layer 3300 contains several packages. These include basic system packages 3310, used, for example, to access basic features of the virtual machine, DAVIC packages 3320, and proprietary packages 3330, used to access features of the software architecture unique to the principal software vendor.

Considered in more detail, the virtual machine 3500 includes the following:
- Language Interpreters 3510. Different interpreters can be installed to conform to the type of applications to be read. These include Java interpreters 3512, PanTalk interpreters 3514, HTML interpreters 3516, MHEG-5 interpreters 3518 and others.
- Service Information (SI) Engine. The SI Engine 3540 loads and monitors common Digital Video Broadcasting (DVB) or Program System Information Protocol (PSIP) tables and puts them into a cache. It allows access to these tables by applications which need the data contained in them.
- Scheduler 3542. This module allows for pre-emptive, multithreaded scheduling with each thread having its own event queue.
- Memory Manager 3544. This module manages the access to memory. It also automatically compresses data in memory when necessary and performs automatic garbage collection.
- Event Manager 3546. This module allows events to be triggered according to priority. It manages timer and event grabbing and allows applications to send events to each other.
- Dynamic Linker 3548. This module allows the resolution of addresses arising from native Java functions, loads native methods from a Java class downloaded into RAM and resolves calls from downloaded native codes towards ROM.
- Graphics System 3550. This system is object-orientated and optimized. It includes graphic window and object management as well as a vectorial font engine with multi-language support.
- Class Manager 3552. This module loads classes and resolves any class referencing problems.
- File System 3554. This module is compact and optimized to manage a hierarchical file system with multiple ROM, flash, RAM and DSMCC volumes. Flash integrity is guaranteed against any incidents.
- Security Manager 3556. This module authenticates applications and controls the access of applications to sensitive memory and other zones of the set-top box.
- Downloader 3558. This module uses automatic data loading from a remote DSMCC carousel or through the NFS protocol, with downloaded files accessed in the same way as resident ones. Memory clear-up, compression and authentication are also provided.

Furthermore, the DAVIC resource notification model is supported so that client resources are efficiently managed.

A kernel 3650 manages the various different processes running in the virtual machine 3500 and device interface layer 3700 (not shown). For efficiency and reliability reasons, the kernel implements relevant parts of the POSIX standard for operating systems.

Under control of the kernel, the virtual machine (running Java and Pantalk applications) runs in its own thread, separate to other 'server' elements of the operating system, such as the mass storage server 3850 (not shown). Corresponding provisions, such as requiring Thread IDs to be passed as parameters in system calls, are also made in the API layer 3300 to allow the applications 3120 to benefit from the multithreaded environment.

By providing multiple threads, more stability can be achieved. For example, if the virtual machine 3500 ceases to operate for some reason, by suffering a crash or being blocked for a long time by an application trying to access a device, other time-critical parts of the system, such as the hard disk server, can continue to operate.

As well as the virtual machine 3500 and kernel 3650, a hard disk video recorder (HDVR) module 3850 is provided for handling the recording and playback functions of the hard disk 2210 or other attached mass storage component. The server comprises two separate threads 3854, 3856 handling recording, one thread 3858 for handling playback, and a file system library 3852 for interfacing with the mass storage components.

An appropriate one of the threads 3854, 3856, 3858 in the hard disk video recorder (HDVR) 3850 receives commands (such as a command to start recording a particular programme) from clients such as the personal video recorder (PVR) application 3154, in response to the user pressing a 'record' button, for example.

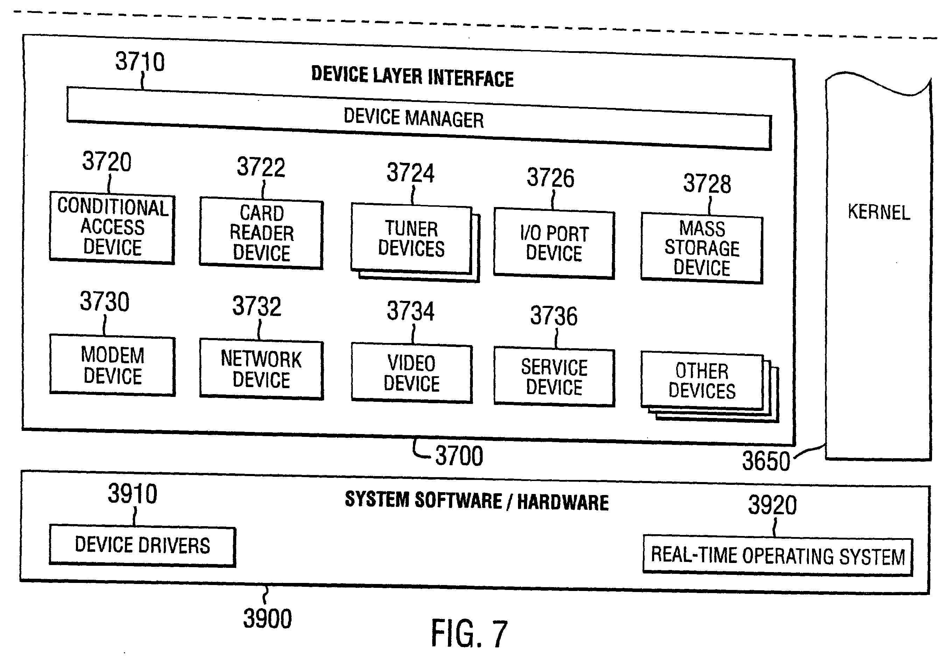

In turn, the thread in question then interacts with the service device 3736 (shown in Figure 7) to set up and synchronise the parts of the receiver/decoder handling the bitstream to be recorded or played back. In parallel, the thread also interacts with the file system library 3852 to coordinate the recording or playback operation at appropriate places on the hard disk 2210 (not shown).

The file system library 3852 then sends commands to the mass storage device 3728 (also shown in Figure 7) which tell the mass storage device 3728 which sub-transport stream (STS) to transfer (via a FIFO buffer), and on which hard disk target the stream should be stored. Allocation of clusters on the hard disk and general file management is carried out by the file system library 3852, the mass storage device itself being concerned with lower level operations.

The service device 3736 mentioned above is unique amongst the devices in that it does not relate to a physical component of the receiver/decoder. It instead provides a high level interface which groups together in a single 'instance' the various sets of tuner, demultiplexer, remultiplexer and hard disk devices in the receiver/decoder, freeing higher level processes from the difficulties of coordinating the various sub-devices.

With reference to Figure 7 the software architecture of the receiver/decoder 3000 corresponding to the bottom half of Figure 5 (comprising the device interface layer 3700 and the system software and hardware layer 3900) will now be described in more detail.

Further devices provided in the device layer include the conditional access device 3720, tuner devices 3724 corresponding to the two (or potentially more) tuners 2016, 2018 of Figure 4, the video device 3734, the I/O port device 3726, and the service device 3736 and mass storage device 3728 mentioned above.

In broad terms, a device can be regarded as defining a logical interface, so that two different devices may be coupled to a common physical port. Certain devices may communicate among themselves, and all devices also operate under the control of the kernel 3650.

Before using the services of any device, a program (such as an application instruction sequence) has to be declared as a "client", that is, a logical access-way to the device or the device manager 3710. The manager gives the client a client number which is referred to in all accesses to the device. A device can have several clients, the number of clients for each device being specified depending on the type of device. A client is introduced to the device by a procedure "Device: Open Channel". This procedure assigns a client number to the client. A client can be taken out of the device manager 3710 client list by a procedure "Device: Close Channel".

The access to devices provided by the device manager 3710 can be either synchronous or asynchronous. For synchronous access, a procedure "Device: Call" is used. This is a means of accessing data which is immediately available or a functionality which does not involve waiting for the desired response. For asynchronous access, a procedure "Device: I/O" is used. This is a means of accessing data which involves waiting for a response, for example scanning tuner frequencies to find a multiplex or getting back a table from the MPEG stream. When the requested result is available, an event is put in the queue of the engine to signal its arrival. A further procedure "Device: Event" provides a means of managing unexpected events.

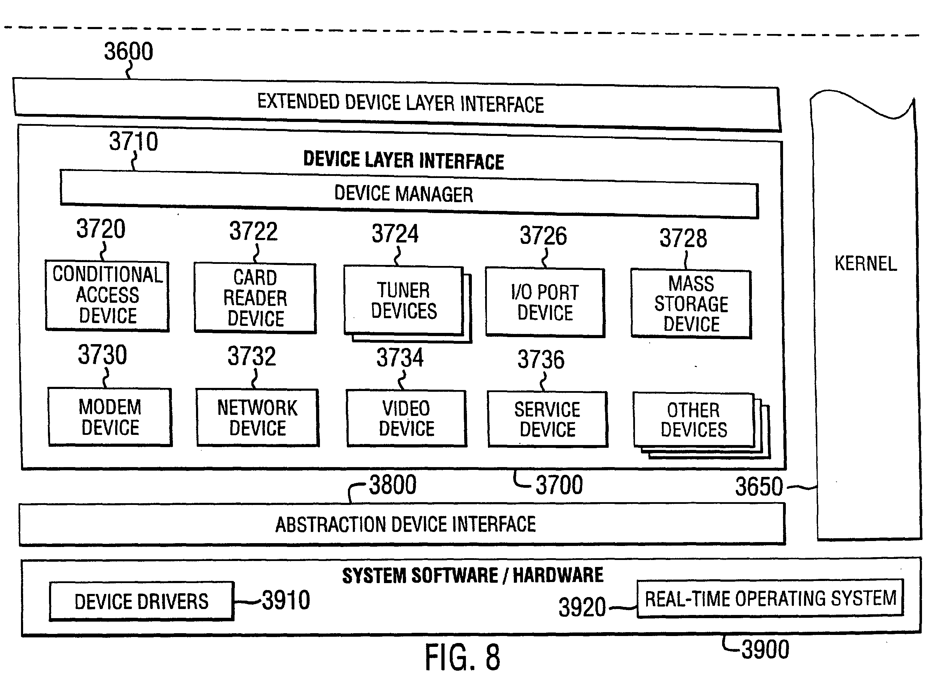

In a second embodiment of the receiver/decoder, the lower half of the architecture of the receiver/decoder is replaced by the layers shown in Figure 8.

In this embodiment, an extended device layer interface (EDLI) 3600 is provided between the virtual machine 3500 (not shown) and the device interface layer 3700, and an abstraction device interface 3800 is provided between the device interface layer 3700 and the system software/hardware layer 3900. Otherwise, like parts are indicated with like reference numerals.

The extended device layer interface (EDLI) 3600 provides a dedicated interface between the virtual machine 3500 and the device interface layer 3700 and generally provides multithreading support to the device interface layer. Functions of the EDLI include routing asynchronous events to the appropriate thread in the middleware (since the device interface layer need not itself support multithreading) and routing messages between threads.

The abstraction device interface 3800 provides a further interface between the device interface layer 3700 and the device drivers 3910 in the system software/hardware layer 3900. By providing such an interface, the large and complex device layer 3700 can be made hardware independent to a greater degree.

### Broadcast testing - Overview

Content transmitted in a digital television system such as the one described above may comprise a large number of digital television programmes as well as radio programmes and interactive applications. Transmitting such content involves the dynamic generation of large amounts of transmission control data, much of which is in the form of MPEG Program Specific Information (PSI) tables and DVB Service Information (SI) tables. In broadcast testing, this control data also needs to be generated, though it may often suffice to generate a static test environment as opposed to the dynamic environment of live broadcast. Software tools may usefully be provided as part of a broadcast testing system to aid generation of such transmission control data.

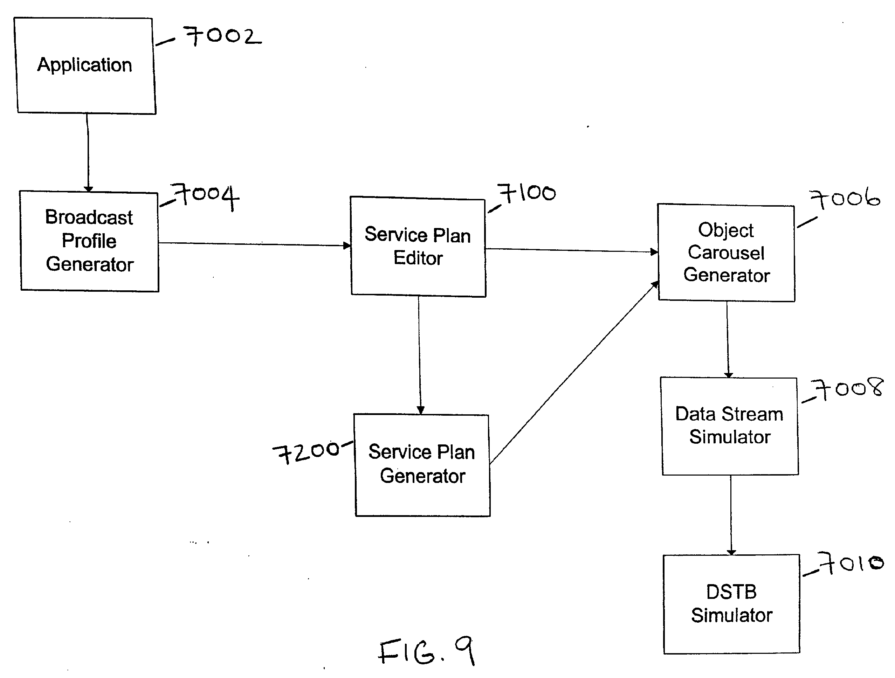

Components of a broadcast testing system including such software tools are shown in overview in Figure 9. Since broadcast testing in a simulated environment is of particular importance when testing the delivery and operation of interactive applications, the broadcast testing system discussed here is specifically adapted for application broadcast testing, though in other embodiments, the broadcast testing system may be adapted for testing other aspects of a digital transmission system.

A broadcast profile for an interactive application 7002 which is to be broadcast is generated using broadcast profile generator 7004. The broadcast profile contains information about the application, including information about files that form part of the application to be broadcast.

The user creates a service plan using service plan editor 7100. A service plan is a description of a digital transmission system, and is used in the generation of transmission control data for the digital transmission system.

In preferred embodiments, the service plan comprises a description of one or more digital broadcast networks involved in the delivery of digital broadcast services. This will be described in more detail later. In addition, application information generated by broadcast profile generator 7004 may be incorporated into the service plan.

A transmission control data generator in the form of service plan generator 7200 generates transmission control data in the form of a set or suite of MPEG / DVB tables according to the service plan and stores information about the structure and configuration of the networks defined in the service plan in a network configuration library 7206. Using the information in the network configuration library and the MPEG / DVB tables generated by service plan generator 7200, object carousel generator 7006 creates MPEG transport packets, from which a simulated transport stream is created by data stream simulator 7008.

Digital set-top box (DSTB) simulator 7010 simulates a receiver/decoder of a digital broadcast system, for example one as has been described above. As such, it simulates the reception and decoding of the simulated data stream generated by data stream simulator 7008 and the execution of application 7002 encoded in it. By observing the simulated reception and execution of application 7002 by DSTB simulator 7010, the broadcast of the application and application data may be tested. Instead of a simulated receiver/decoder (DSTB simulator 7010), a regular receiver/decoder, or a receiver/decoder modified for testing purposes, may be used.

Applications may typically comprise a number of modules, application files, resource files and/or data files, and are broadcast and downloaded using methods known in the prior art, for example as described in International Patent Application No. WO 98/43431 (whose disclosure is incorporated herein by reference) and/or International Patent Application No. WO 00/19708 (whose disclosure is incorporated herein by reference). Simulation of broadcasting and downloading applications by the object carousel generator 7006, data stream simulator 7008 and DSTB simulator 7010 is achieved by simulating such methods.

### The service plan

The service plan comprises a description of the digital television system and is used to generate the control data (in the form of MPEG / DVB tables) required for broadcast simulation.

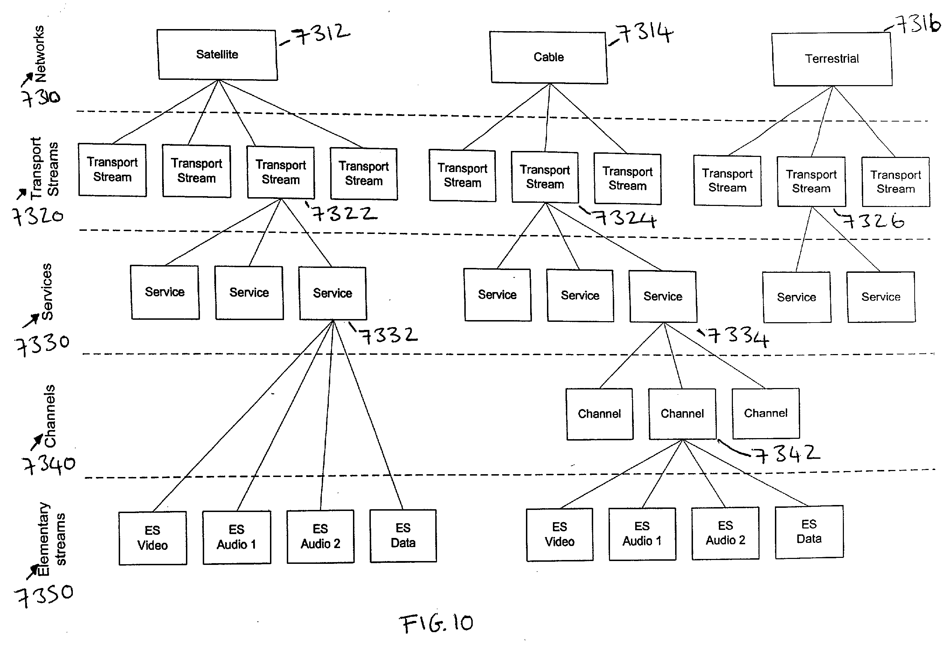

The typical structure of a service plan is shown in Figure 10 by way of example.

A service plan defines the structure of one or more networks 7310 which form part of the digital television system. Networks 7310 are digital broadcast networks, and in the present example, the service plan includes information on three such networks, namely a digital satellite network 7312, a digital cable network 7314 and a digital terrestrial network 7316.

Each of the one or more networks 7310 consists of a number of transport streams 7320. In the present example, digital satellite network 7312 consists of four transport streams. Each transport stream is typically associated with a physical channel of the network. A physical channel may for example be a transponder of a satellite network or a frequency of a cable or terrestrial network upon which the transport stream is modulated.

Each transport stream is a bit stream structured as a series of transport packets as defined in the MPEG standards. Conceptually, each transport stream consists of one or more services 7330. A service is a series of events, particularly audio/visual events or programmes. A service may, for example, be what is colloquially referred to as a 'TV channel', for example *TV5* or *Canal*+. Alternatively, a service may be some other digital broadcast service and may comprise an application broadcast.

Each service consists of one or more elementary streams (ES). In the present example, Service 7332 comprises four such elementary streams: one video, two audio and one data stream. Service 7332 may, for example be a TV channel having a video component, two audio components (for example separate soundtracks in two languages) and a data component (for example, digital teletext).

Alternatively, a service may comprise a number of channels, each channel being a collection of elementary streams (as distinct from the colloquial usage with reference to a TV channel as indicated above). In the example shown, service 7334 consists of three channels, each having elementary streams. Figure 10 shows four elementary streams for channel 7342. For example, if service 7334 provides coverage of a motor sport event, then the different channels it comprises may provide coverage of different aspects of that event. For example, channel 7342 may provide television pictures and sound from the pit lane, whilst another channel may provide pictures and sound from the finish line.

In a preferred embodiment, in addition to defining the structure of the digital television system, a service plan also comprises information on any applications which are to be transmitted by the digital television system. In some embodiments, information on other content, such as television programmes, may also be stored in the service plan.

Using the service plan, service plan generator 7200 (shown in Figure 9) generates transmission control data in the form of a set of MPEG / DVB tables. These are generated in accordance with the relevant MPEG and DVB standards. The MPEG /DVB tables are transmitted as part of transport streams and allow the receiver/decoder (or a DSTB simulator) to identify, access and retrieve transmitted content.

### Overview of MPEG PSI and DVB SI tables

Some of the main MPEG / DVB tables will now be briefly described with reference to the example service plan shown in Figure 10. Fuller descriptions may be found in the MPEG-2 Systems specification and the DVB Service Information specification.

Information about each network is encoded in a Network Information Table (NIT). In any given transport stream, two kinds of NIT are provided: The NIT Actual describes the network on which the transport stream containing it is broadcast. The NIT Other describes a different network which is potentially accessible to the receiver/decoder.

In the example of Figure 10, three NITs would be included in transport stream 7324: A NIT Actual table to describe cable network 7314, and two NIT Other tables to describe satellite network 7312 and terrestrial network 7316 respectively. This enables the receiver/decoder to switch between transport streams on different networks in order to access the services being broadcast on those networks.

Information about which services are broadcast on a given transport stream is provided by the Service Description Table (SDT). Again, two kinds of SDT exist, namely the SDT Actual and the SDT Other. The SDT Actual contains information about the services provided by the transport stream containing the SDT Actual table. The SDT Other contains information about services provided on other transport streams. This allows the receiver/decoder to find the correct transport stream for a service selected by the user.

Each service is described by a Programme Map Table (PMT). The PMT includes information about the elementary streams which constitute the service. References (by PID) to the PMT tables for each of the services in a given transport stream are stored in the Programme Association Table (PAT) included in the same transport stream.

Finally, services within the service plan may be grouped into a bouquet. A bouquet is typically a commercial offering such as a group of TV channels which may be purchased together. The Bouquet Association Table (BAT) contains information on the different services available in a bouquet.

Returning to Figure 9, a service plan editor 7100 is provided to allow interactive creation of a service plan describing a digital transmission system, for example a digital television system. An important feature of the broadcast testing system described herein is the generation from such a service plan of a set of MPEG / DVB tables implementing that service plan.

As will be apparent from the above description of the MPEG / DVB tables involved, there is duplication of information across networks and transport streams as well as within transport streams. For example, information on services available in the service plan is duplicated several times in the form of Service Description Tables (SDT) included in each transport stream. The automatic generation of the tables from a single service plan encompassing one or more networks ensures the consistency of the information across tables.

### Application broadcast profiles

In a preferred embodiment, the broadcast testing system described herein is adapted for application broadcast testing. To this end, a broadcast profile generator 7004 is provided which may be used to generate a profile specifying how an application is to be broadcast.

A broadcast profile is stored as an XML file and contains information about interactive applications for execution on an interactive receiver/decoder or digital set-top box (DSTB), or, in the simulation environment, a DSTB simulator. The broadcast profile is used by service plan editor 7100 when the broadcasting environment is defined (in terms of a service plan) and by object carousel generator 7006 when preparing the application for broadcast or for simulated broadcasting.

The broadcast profile contains information on where the application and its constituent files are stored and on how the application is to be executed when broadcast. A broadcast profile also contains information on how application files are to be organized for broadcasting.

The broadcast profile generator 7004 allows a user to create a broadcast profile by specifying the application, its constituent files and broadcast / execution options.

Examples of such broadcast / execution options include:
- Whether the application starts automatically once downloaded by the receiver/decoder (or, in a simulation environment, the DSTB simulator);
- How the application is launched, for example by selection of an on-screen button;
- Whether or not the application is interactive;
- The programming language in which the application is coded, for example Java or HTML.

The selected options are stored in the broadcast profile together with the names and locations of application modules or files. The user may also select the order in which application modules are to be downloaded by the interactive receiver/decoder, since it may often be desirable not to download the entire application at once. This information is then also stored in the broadcast profile.

### Creation of the service plan

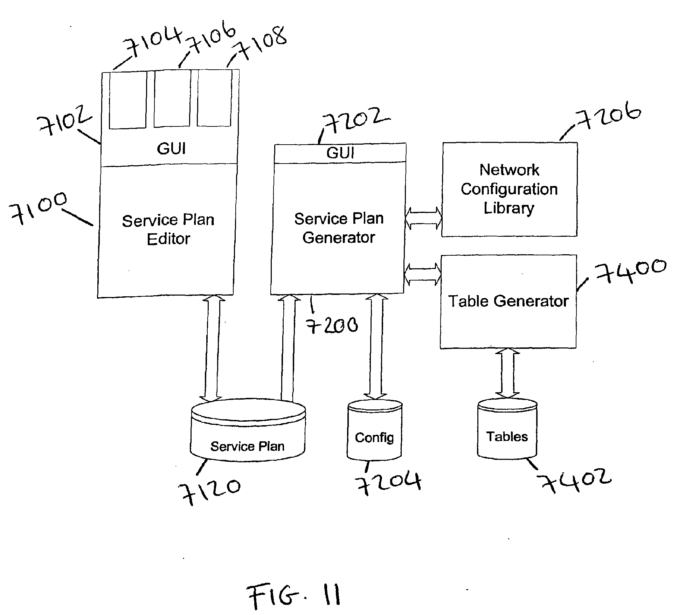

The creation of a service plan and the generation of the MPEG / DVB tables from the service plan is shown in overview in Figure 11.

A first module, service plan editor 7100, allows for the interactive creation of a service plan 7120 using a user interface 7102. A second module, service plan generator 7200, generates the MPEG / DVB tables 7402 implementing that service plan with the help of table generator 7400. The generation of the tables occurs in accordance with certain user options, specifiable through user interface 7202 and stored as configuration information 7204, allowing configuration settings to be retained from one generation to the next. Information about the networks specified in the service plan is also stored in network configuration library 7206.

The service plan comprises the following categories of information:
- *Administration information* comprises information of general relevance to the service plan.
- *Service plan information* comprises information on the structure of the networks forming part of the service plan, including information on the transport streams, services and elementary streams of each network.
- *Application information* comprises information on applications which are to be broadcast.

Service plan editor 7100 provides a user interface 7102 suitable for user entry of the above information. The user interface 7102 comprises three views: an administration view 7104 for entering administration information, a service plan view 7106 for entering service plan information and an application view 7108 for entering application information.

The service plan, once defined, is stored as an XML document. In some embodiments it may be stored in several files; for example, the administration information may be stored separately from the service plan information.

### Service plan editor

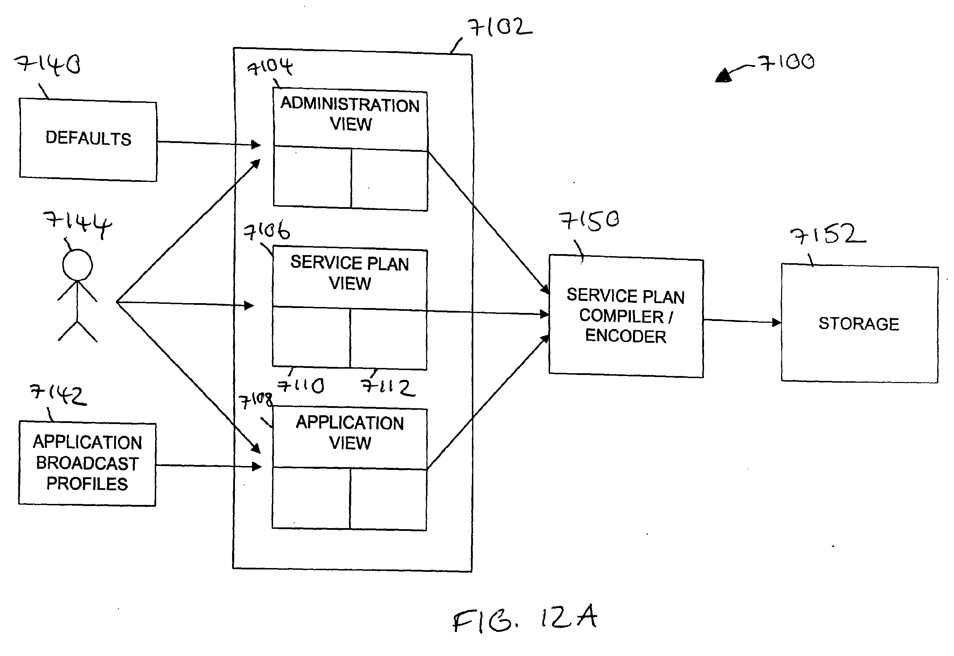

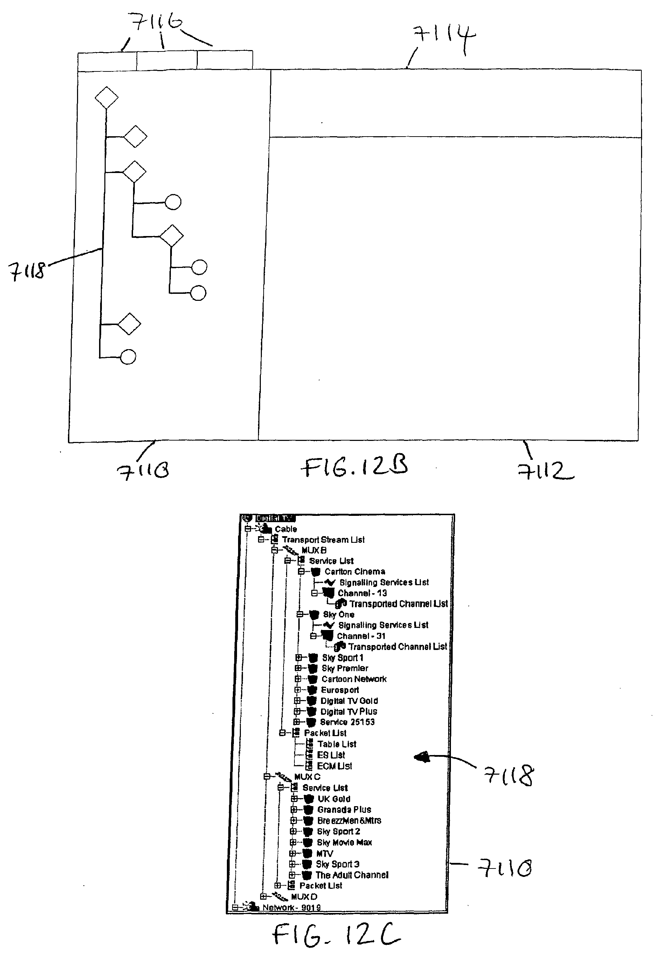

Service plan editor 7100 will now be described in more detail with reference to Figures 12A, 12B and 12C.

An overview of the service plan editor 7100 is shown in Figure 12A.

Service plan editor 7100 comprises a user interface 7102 for receiving user input from a user 7144. The user interface is split into three views: administration view 7104, service plan view 7106 and application view 7108. Each view comprises two main interface elements; referring, for example, to service plan view 7106, each view comprises a hierarchical interface element in the form of component tree pane 7110 for viewing, adding and removing components of the service plan, and a parameter pane 7112 for viewing and modifying parameters of the components.

User 7144 inputs data relating to the broadcast system in each of the three views. In addition, defaults 7140 comprising default values and constants are retrieved and displayed in administration view 7104. This includes, for example, constant values defined by the MPEG and DVB standards. Information about applications which are to be broadcast may be loaded into the service plan editor in the application view 7108 in the form of application broadcast profiles 7142.

Service plan compiler / encoder 7150 compiles the data provided via the user interface 7102 and encodes it in a usable format. In a preferred embodiment, service plan compiler / encoder 7150 comprises an XML encoder for encoding the data as an XML document. The XML document is then stored as an XML file in storage 7152.

A schematic of the basic structure of the service plan editor's user interface is shown in Figure 12B. The basic structure of the user interface is the same in each of the three views (the administration, service plan and application views 7104, 7106 and 7108 as shown in Figure 12A).

On the left, the component tree pane 7110 shows an overview of either the administration information, service plan information or application information depending on the active view. This is presented as a tree 7118 of components. Components which themselves comprise sub-components are shown as diamond shapes, whilst components which have no subcomponents are shown as circles. The user can choose to view or hide the sub-components associated with a component. This improves the clarity of complex component trees. Each component is displayed in the tree with an icon designating the type of the component and a brief text label for easier identification. A screen shot of an example implementation of component tree pane 7110 (in the service plan view) is shown in Figure 12C.

Returning to Figure 12B, the user may also select a component in the component tree in order to view or change its parameters. The information pane 7114 provides a brief description of the selected component. Parameter pane 7112 displays any parameters associated with the component, and, if the parameters can be modified by the user, allows for their modification. In the case where the component represents a list of items, the parameter pane shows the list.

The user can switch between the administration, service plan and application views using tabs 7116. The component tree view is of particular benefit in the service plan view as its hierarchical structure is used to represent the structure of the networks in the service plan (see, for example, Figure 10) in an intuitive and user-friendly way.

In order to define a service plan, a user undertakes the following steps:
- In a first step, the user provides the necessary administration information in the administration view. The administration information is structured in a component tree, and is largely predefined in accordance with MPEG / DVB standards. However, some aspects of the administration information can be modified by the user.
- In a second step, the user creates a component tree defining the service plan in the service plan view by creating components and setting appropriate values for component parameters.
- In a third step, the user provides information about the applications that are to be broadcast as part of the service plan in the application view.

The different views will now be described in more detail.

### Administration view

In the administration view, information of general applicability to the service plan is entered. This includes, for example:
- defining the organizations, service providers and operators involved in the delivery of the service plan;
- defining the countries to which the service plan applies, and, if applicable, regions and parental ratings for each country.
- defining the languages available for use in the service plan. A standard list of languages is predefined in the service plan editor, though languages can be added.
- specifying address information for Service Broadcasters and Injectors (SBIs).

Furthermore, the administration view allows MPEG / DVB constants and standard pre-defined service, stream, packet and content types to be viewed for reference purposes.

### Service Plan View

The component tree hierarchy in the service plan view largely reflects the hierarchy of the actual network(s) as shown in the example of Figure 10. An example of a component tree defining a service plan is given in Figure 12C, shown as it may be displayed by the user interface.

The root of the component tree is the service plan itself, shown by its name, in this example "Digital TV". The user may select the languages that are supported for the service plan (from those defined in the administration view) as well as a default language for the service plan. The user may provide translations of certain textual information, for example, service providers' names, in any of the languages selected.

The service plan component may comprise one or more network components.

In the example of Figure 12C, two network components have been defined for this service plan, namely "Cable" and "Network - 9019". Most parameters of the network component are specific to the type of the network. Three types of network may be defined in the service plan editor:
- Satellite network
- Cable network
- Terrestrial network

When adding a network component to the service plan, the user is required to specify the required network type and provide information about the network, for example the orbital position of a satellite in the case of a satellite delivery system.

For each network, the user may define one or more transport streams by adding transport stream components to the component tree. In the example shown in Figure 12C, the "Cable" network comprises a list of three transport streams, namely "MUX B", "MUX C" and "MUX D".

In the service plan view's component tree 7118, each transport stream component comprises two sub-components: a service list component and a packet list component. These are added to the component tree automatically when a new transport stream component is created. The service list component contains information about the services carried in the transport stream in the form of service components. The packet list component contains information about the packet identifiers (PIDs) used in the transport stream.

In the example of Figure 12C, the service list for transport stream "MUX B" comprises nine services. The user provides information about each service, including, for example, the type of service, its channel number (as displayed to the DSTB user), the service provider, the running status and the PMT and PCR PIDs.

Furthermore, the user can specify a list of operators associated with the service. These are selected from the operators predefined in the administration view (see above).

A service component comprises one or more channel components. When a new service component is created, the service plan editor automatically adds a channel component entitled "Main channel." In addition, further channel components can be added to the service component if required. Each channel corresponds to a group of related elementary streams; for example the audio and video streams which form part of a TV channel. If a service is not divided into multiple channels (as shown in Figure 10, for example, for service 7332), then the service's elementary streams are listed in the "Main channel" component.

A list of elementary streams can be specified for each channel component by selecting the required elementary streams from the list of elementary streams available in the transport stream. These are defined separately (see below).

For each new channel, a transport applications list component is automatically created. This is initially empty, and lists the applications that can be broadcast on this channel. The list is read-only, and is displayed here for reference only. Application transport channels are specified separately in the application view (described below).

Returning to the service component level of the example component tree shown in Figure 12C, a signalling services list component is also associated with the service component. Again, this is a read-only component, and consists of a list of all signalling services provided on this service. Signalling services are specified separately in the application view and are included in this view for reference only.

In addition to a service list, each transport stream also comprises a packet list. The packet list contains information about the allocations of packet identifiers (PIDs) to MPEG packets. The packet list comprises a table list, an elementary stream (ES) list and an ECM list. The table list contains PID allocations for MPEG / DVB tables. The elementary stream contains PID allocations for the elementary streams available on the transport stream. Finally, the ECM list contains PID allocations for Entitlement Control Messages (ECMs).

The user is required to allocate PIDs to the following MPEG / DVB tables:
- PMT - Program Map Table
- AIT - Application Information Table
- ECM - Entitlement Control Message
- EMM - Entitlement Management Message

A PID allocation is defined by specifying the table for which a PID is to be allocated and the PID itself, and selecting Section Broadcasters and Injectors (SBIs) from those defined in the administration view. For PID allocations for elementary streams, the type of elementary stream may also be specified as well as the component tag, association tag, and, in the case of an audio or video stream, the name of an audio or video file to be used by the DSTB Simulator when simulating reception of the elementary stream.

### Application view

The service plan editor provides application view 7108 (shown in Figure 12A) for entering information regarding applications to be broadcast as part of the service plan. The component tree of the application view is simply a list of applications, each having two sub-components: a transport channel list component and a signalling service list component.

From the application view, the user adds an application to the service plan by importing an application broadcast profile previously created using broadcast profile generator 7004 (see Figure 9).

The user then specifies the channel(s) on which the application is to be broadcast (the transport channels) by selecting the required channel(s) from the channels previously defined in the service plan view. The user interface presents a list of all defined channels to the user, from which he may then select the appropriate one(s). These are added to the transport channels list.

For each application, the user also specifies on which service(s) the application can be started (the signalling services) by adding the required service(s) to the signalling services list. The required service(s) are selected from the services previously defined in the service plan view.

During (simulated) broadcast, when the DSTB simulator is tuned to a given service, applications associated with the service by having the service designated as a signalling service in the manner described above are downloaded by the DSTB simulator and, depending on the settings in the application broadcast profile, started automatically or in response to some user interaction, for example, the pressing of a key on the remote control. To download the application, the receiver/decoder accesses a channel designated in the transport channels list, commonly a channel of the active service, where the MPEG packets containing the application files can be found.

### Storing the Service Plan

Referring again to Figure 11, once the user has defined the service plan using user interface 7102, it is stored as service plan 7120. In a preferred embodiment, the stored service plan comprises two XML documents. The first contains the administration information entered in the administration view. The second contains the service plan itself, including information entered in both the service plan view and the application view. In other information, the service plan may be stored in a single XML document.

The hierarchical nature of the service plan (and the broadcast environment it describes) is mirrored by a similar structure within the XML service plan document. This is achieved using XML elements to represent a particular component of the broadcast environment, for example a transport stream. Such an XML element may contain further elements representing other components in the hierarchy; for example, an element representing a transport stream may comprise several elements representing services, since several services are usually associated with a transport stream. An example of how this may be encoded is given by the following XML DTD fragment:

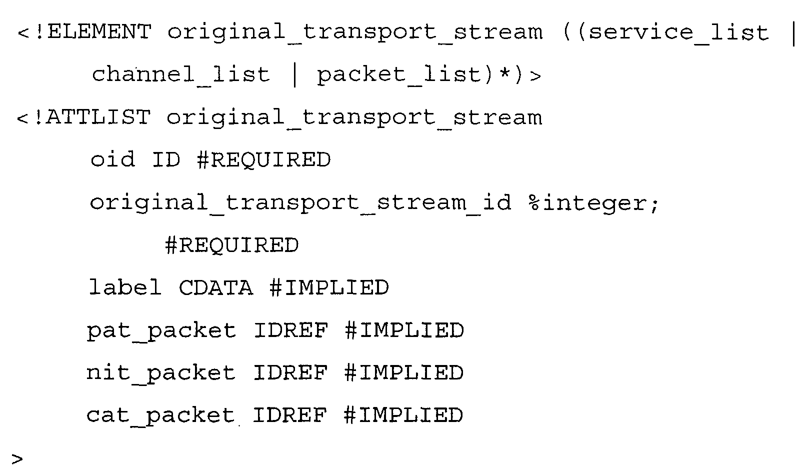

In this example, the original_transport_stream element comprises a list of services (service_list), a list of channels (channel_list) and a list of packets (packet_list), each encoded by their own XML elements. The original_transport_stream element further comprises a number of XML attributes for holding information about the transport stream; in general this corresponds to information entered in the service plan editor.

Once a service plan has been created using the service plan editor, it can be used by a broadcast system to control broadcasting operations. Alternatively, it may be used in a broadcast simulation and testing context. In a preferred embodiment, the service plan editor is used in conjunction with the service plan generator described below.

### Service plan generator

Returning to Figure 11, service plan generator 7200 is used to generate transmission control data in the form of MPEG / DVB tables 7402 and network configuration information stored in library 7206 for the purposes of broadcast simulation.

The service plan generator receives the service plan 7120 (in the form of the XML service plan document and XML administration document) and from this generates network configuration information, which is stored in network configuration library 7206, and a number of XML files representing the MPEG / DVB tables to be created.

These are converted into actual MPEG / DVB tables 7402 by a converter in the form of table generator 7400. The generation of interim XML representations of the tables allows for inspection and amendment by the user and thus aids the testing and debugging process, since XML documents are usually more comprehensible to the human reader than the tables themselves in binary format would be. It also enables integration of the service plan generator with the general purpose table generator 7400 (described below).

The user can initiate the generation of the network and set certain parameters for the generation process via user interface 7202. The parameters that may be set together constitute the service plan generator configuration, which the user may save to (and retrieve from) a configuration file 7204. The configuration file is an XML document.

The service plan generator provides the following generation functions, which the user may select from a menu:
- Generate selected tables. Only those tables for which the generation settings have changed are generated.
- Generate all tables. All tables are generated.
- Generate network. The network configuration information is generated and stored in the network configuration library.

Furthermore, the user may specify whether tables should be generated in XML or binary MPEG format, or both. The service plan generator itself outputs tables in XML format. However, if the user selects generation of MPEG tables, then the XML tables are converted to MPEG table files by the table generator 7400 (described below). If the user does not select generation of XML tables, then the XML tables are nevertheless created to be provided as input to the table generator, but are subsequently discarded.

In a preferred embodiment, generation options can be specified for the following tables (though in other examples, generation options may also be provided for other tables):
- Network Information Table (NIT)
- Service Description Table (SDT)
- Program Association Table (PAT)
- Program Map Table (PMT)
- Bouquet Association Table (BAT)

Generation options which may be specified include the TID (Table Identifier), table version number, table cycle time (time lapse between the emission of tables onto the transport stream) and section length. For some tables, the user can also select whether or not to generate certain MPEG / DVB descriptors, for example whether or not to generate the Frequency List Descriptor for the NIT, and whether to generate descriptors in multiple languages (provided the service plan has been defined to support multiple languages).

The user may also select whether to generate each of the tables for the current network, for other networks in the service plan or both. In the example of Figure 10, the service plan comprises three networks. It may be desirable to include service information tables for other networks in the transport streams of a given network to enable the receiver/decoder to access all networks defined in the service plan. The user may also choose not to generate a given table at all.

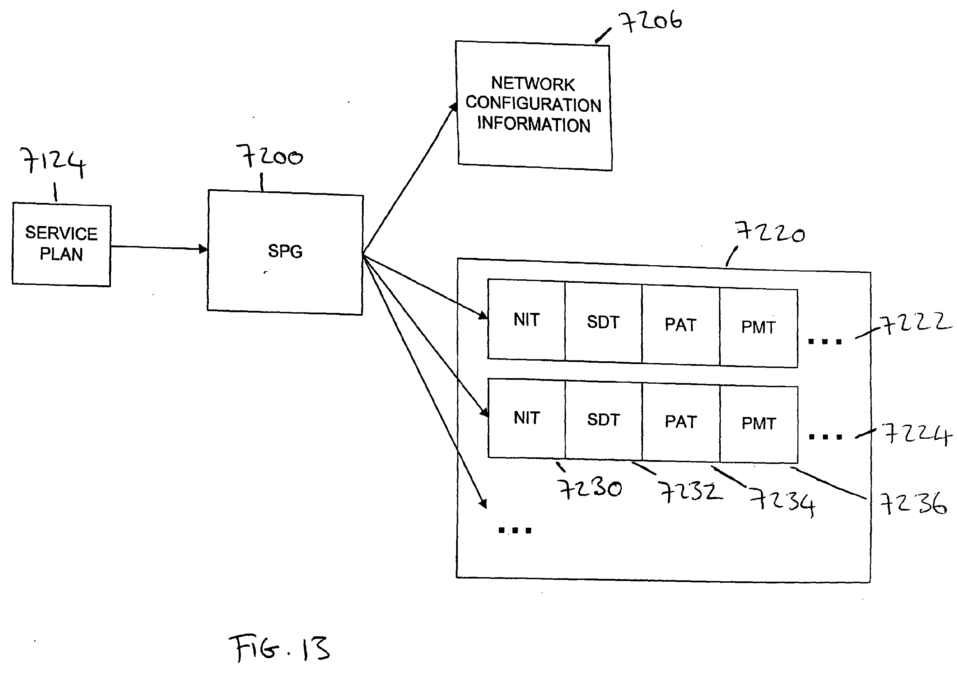

The generation of tables will now be described in more detail with reference to Figure 13.

A previously created service plan 7124 is provided as input to service plan generator 7200. The service plan generator 7200 creates the network configuration library 7206 for use by the broadcast simulation system.

The network configuration library contains information on the structure of the networks making up service plan 7124. In a preferred embodiment in which the service plan generator is an application programme for execution in a Microsoft Windows (TM) based environment, the network configuration information is stored as a hierarchy of keys in the Windows registry, from where it can easily be accessed by the object carousel generator 7006 (see Figure 9). The hierarchy of keys mirrors the hierarchy of the component tree defined by the user in the service plan editor, having keys for the different transport streams, services, channels and so on. Since the Microsoft Windows (TM) registry is by its nature hierarchical and is easily accessible by other applications, it is well suited for this purpose.

The network configuration library further contains information on the applications to be broadcast as specified in the broadcast profiles created for the applications using the broadcast profile generator.

For each network 7220 defined in the service plan (only one is shown though more than one may be defined), the service plan generator generates the necessary MPEG /DVB service information tables. Service information tables shall in this context be taken to include both DVB service information tables and MPEG-2 System Layer tables, in particular MPEG-2 Program Specific Information (PSI) tables. In further embodiments, other tables may also be included, including proprietary tables.

Specifically, the service plan generator generates the required tables for each transport stream of network 7220. In the present example, two transport streams 7222 and 7224 are shown. For transport stream 7224, the tables generated may, for example, include NIT 7230, SDT 7232, PAT 7234 and PMT 7236. However, this list is intended to be an example and not exhaustive.

Typically, for a transport stream 7224, NITs will be generated both for the actual network (on which transport stream 7224 is broadcast) and for any other networks in the service plan. SDTs may be generated for both the services on the present transport stream and for services on other transport streams. A PAT is also generated for the transport stream, along with one or more PMTs storing the elementary stream PIDs for each of the channels defined on the transport stream. In one embodiment, in addition to the information already described, the service plan editor also provides for events to be defined and stored in the service plan, and the service plan generator generates EIT present/following and EIT schedule tables for both the actual and any other defined transport streams. Other MPEG / DVB tables are generated as appropriate.

Which tables are generated is dependent on the generation options specified by the user. The tables are generated in accordance with the relevant MPEG and DVB standards using the information supplied in the service plan editor.

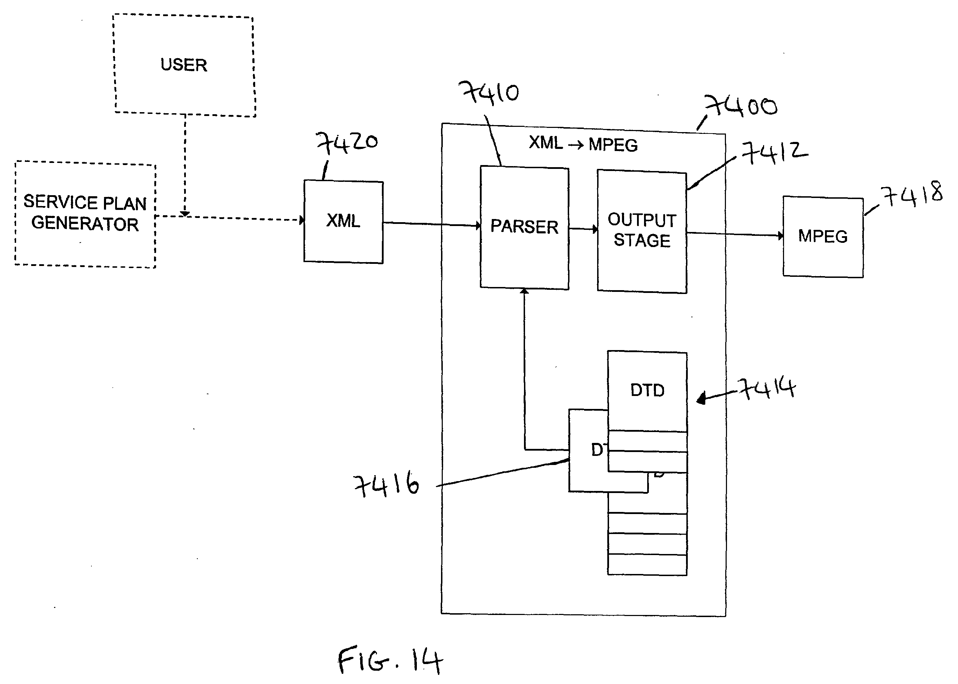

The tables are generated as XML-encoded table documents; the structure and encoding of these files is described below. These files can be inspected, and, if necessary amended by the user, and can be automatically converted into binary MPEG / DVB files suitable for (simulated) broadcasting by the table generator 7400 (see Figure 14).

### Simulation

Referring to Figures 9 and 11, the service plan generator generates XML table documents which are converted into binary MPEG / DVB files (each file holding a table section) by the table generator 7400. The object carousel generator 7006 uses the network configuration information stored in network configuration library 7206 to create transport packets for the various transport streams. Specifically, the object carousel generator places the binary table sections generated by table generator 7400 into MPEG transport packets which are provided as input to data stream simulator 7008. The MPEG / DVB table sections are repeatedly emitted by the object carousel generator according to the table cycle times set in the service plan generator.

Furthermore, using the application broadcast profiles for the applications that are to be broadcast, the object carousel generator retrieves application files and creates MPEG table sections and transport packets for transporting and signalling the applications. Where audio or video files have been specified for simulation of audio or video elementary streams, these are also converted into MPEG transport packets by the object carousel generator.

From the MPEG transport packets created by the object carousel generator, data stream simulator 7008 creates an MPEG transport stream which is provided as input to the DSTB simulator.

### Generation of MPEG / DVB tables from XML table documents

The generation of MPEG / DVB tables from XML table documents will now be described with reference to Figure 14.

Table generator 7400 is a converter for converting transmission control data, preferably MPEG / DVB tables, between different formats. In a preferred embodiment, it converts MPEG / DVB tables formatted using XML to binary MPEG /DVB tables suitable for insertion into a transport stream.

The service plan generator outputs XML table documents compatible with the table generator 7400. The general syntax and structure of XML table documents will be described later. However, specifically, each type of table has associated with it an XML document type definition (DTD) defining how a table of that type is encoded. The DTD also defines the structure of the MPEG / DVB table which is to be generated, and may set default or fixed values for fields of the table.

Table generator 7400 comprises an XML processor 7410, a DTD library 7414 comprising a DTD for each of the MPEG / DVB tables supported by the table generator, and an MPEG output stage 7412.

XML table document 7420 is a data file comprising an MPEG / DVB table encoded in XML according to a particular DTD 7416. DTDs for certain standard MPEG /DVB tables are provided in DTD library 7414 as part of table generator 7400. However, the table generator is not limited to generating only those tables. DTDs representing other table types, for example private table types, may be added, enabling the table generator to generate those tables also. In the following description, it is assumed that XML table document 7420 is valid with respect to one of the DTDs in library 7414 of supported table types. Invalid XML table documents are rejected by the table generator, and no generation takes place.

XML table document 7420 is provided as input to the XML processor 7410 of table generator 7400. The XML processor retrieves the appropriate DTD 7416 from DTD library 7414 as given by the DOCTYPE declaration in the XML table document. Using DTD 7416, XML table document 7420 is validated, and its content made available to MPEG output stage 7412. MPEG output stage 7412 produces an MPEG table file 7418 containing the MPEG table.

Each type of MPEG / DVB table which is to be generated by the service plan generator has a specific document type definition (DTD) associated with it specifying the structure of the XML document in which the table is encoded. Given the structure of a DVB / MPEG table, a corresponding XML DTD can easily be constructed.

Table generator 7400 can generate any DVB / MPEG table as long as its XML encoding conforms to a basic structure. This structure will now be described, and should be understood in the context of the appropriate table definitions provided by the DVB and MPEG standards.

### XML table document structure

An MPEG / DVB table is modeled in the XML table document 7420 as a hierarchical structure of XML elements. The main element represents the table itself and is composed of lower-level elements. These lower level elements can themselves be one of the following:
- Composite: A composite element is one that contains one or more child elements, child elements being other elementary or composite elements.
- Elementary: An elementary element does not contain any child elements.

Each element has at least an attribute type giving the type of the element, and may have further attributes. Where the element represents a field to be included in the final output (that is to say an MPEG / DVB table field), it has an attribute length giving the size of the field in bits, and an attribute value holding the value to be stored in the field.

The main structural elements of an MPEG / DVB table are:
- the table itself;
- a header extension; and
- private data.

The structure of these top-level elements will now be described.

### Table

The first element in the XML table document is always a table element; its attribute type is equal to table. In a preferred embodiment, there is only one table element in an XML table document.

In addition to the type attribute (type='table'), a table element may have three further attributes: tid, tidext, and crc32.

The tid attribute is mandatory and represents the value of the table_id. It is fixed to the appropriate value in the DTD. The tidext attribute represents the value of the table_id_extension field. If the tidext attribute is present in the DTD, the MPEG table is generated with a long header. Otherwise, it is generated with a short header.

The crc32 attribute is a boolean attribute. In case of a short header (tidext is not present), if crc32='true', a crc32 value will be added at the end of the section. For a long header, this attribute is ignored and a crc32 value is always added at the end of the section.

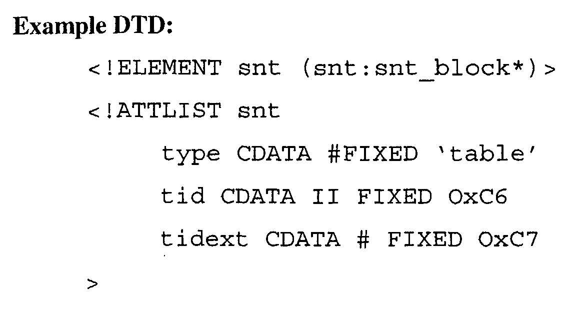

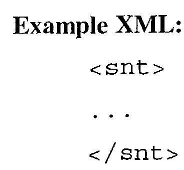

### Header Extension

Some MPEG / DVB tables have a header extension and, if this is the case, the header extension is repeated on each section of the MPEG / DVB table that is generated.

The header extension is represented by a header_ext element. The attribute type of the header_ext element is equal to headerext.

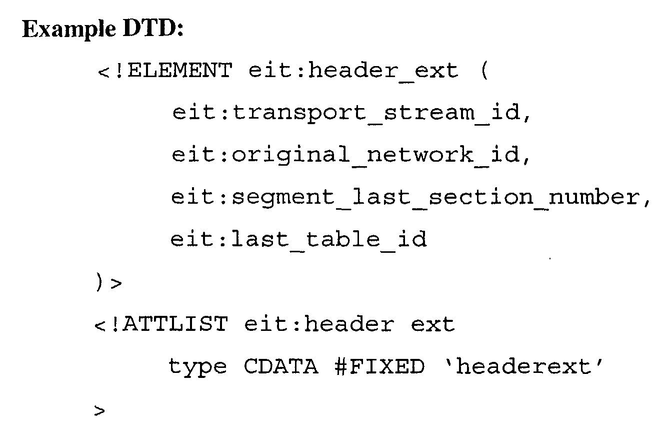

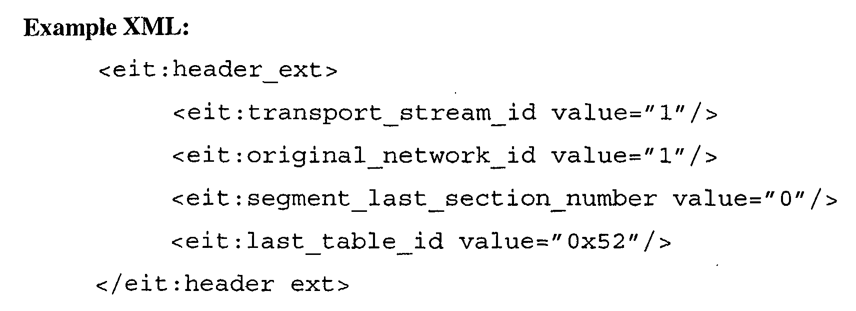

### Private Data

A single private_data element is always present in a table. The attribute type of the private_data element is equal to privatedata.

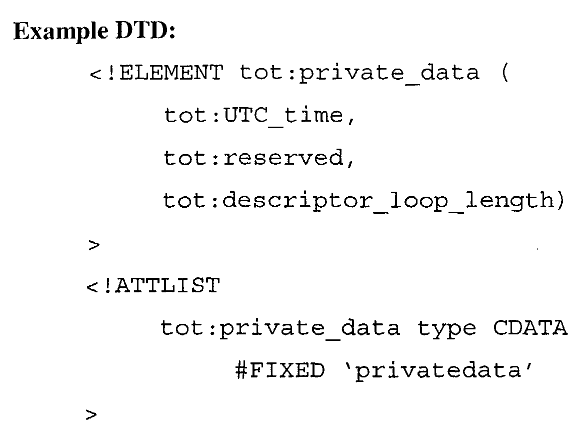

The private data element may contain elementary (or empty) elements representing MPEG / DVB table fields, and composite elements representing further substructures. The elementary elements can be of the types integer, string, char or bytes. The possible composite elements are: descriptor, looplength, loopnumber and block.

A descriptor element models an MPEG or DVB descriptor, and can itself contain any of the above elementary or composite elements, with the exception that it cannot contain further descriptors.

Fields or groups of fields which can be repeated, also referred to as loops (due to the fact that they are usually represented as such in MPEG / DVB table definitions), are represented by either the looplength or the loopnumber elements. In the first case the value attribute of the element gives the total length of the loop in bytes. In the second case it gives the number of child elements in the loop. In either case, the element contains zero or more child elements representing the loop contents. The child elements may be any of the elementary or composite elements listed above, including further loops.

Block elements represent a group of fields in the MPEG / DVB table and can be used to structure the table definition. Their child elements may be any of the elementary or composite elements listed above.

When composite elements are used in a table with a long header, they can be split across sections if the length of the private data exceeds the maximum length of the section. By default, the table generator splits the private data when the maximum section length is reached.

To avoid splitting a composite element across sections, an attribute cutting can be added to these elements. It may have the following values:
- If cutting='false', the table generator ensures that the composite element is not split. Instead, if the size of the composite element plus the current size of the section exceeds the maximum section length, then the table generator starts a new section and places the composite element in the new section.
- If cutting='force', the table generator starts a new section even if the current one is not full and places the composite element in the new section. For each new section "forced" in this way, a new value for tidext can be specified using the following XML syntax:
   <snt:snt_block cutting="force" tidext="0x02">
   The table generator will then use the new table ID extension for the "forced" section created for the composite element. If the tidext attribute is not present in a composite element which has a cutting attribute set to "force", the tidext value defined for the table is used.
- If cuttings' true' or is omitted, the table generator splits the private data when the maximum section length is reached.

Finally, two special-purpose element types are also provided:
- binaryfile
- offset

These element types will now be described in more detail along with examples where appropriate.

### The integer, string, char and bytes element types

These elementary elements represent fields in MPEG / DVB tables. Each has, in addition to the attribute type, an attribute length, giving the size of the field to be generated in bits, and an attribute value holding the field value.

The following table summarises these element types, giving the possible values for the type, length and value attributes.

**TABLE 1.**

| *Field formats* | | | | |
|---|---|---|---|---|
| **Type** | **Length** | **Value** | | |
| | | **Base** | **Prefix** | **Example** |
| integer | 1 to 64 | Binary | 0b or 0B | "0b0101" |
| | | Hexadecimal | 0x or 0X | "0xFFC0" |
| | | Decimal | No prefix | "104" |
| char | 8 | Any character | | "A" |
| string | 8 to 8 times the number of characters | Any character | | "myString" |
| bytes | 8 to 8 times the number of bytes | Hexadecimal representation, without prefix | | "C0AF12" |

As the length of a char element is always 8 bits, the length attribute is optional and may be omitted.

For the string and bytes elements, if a value for the length attribute is given (in either the XML table document or the DTD), then the value attribute must contain a string or byte sequence of exactly that length. If the length attribute is absent, the table generator makes the size of the field to be added to the generated table equal to the length of the string or byte sequence.

The attributes type and length are generally fixed in the DTD and do not appear in the XML table document. The attribute value may appear in the XML DTD to provide a default or fixed value, or in the XML document if its value is not fixed in the DTD.

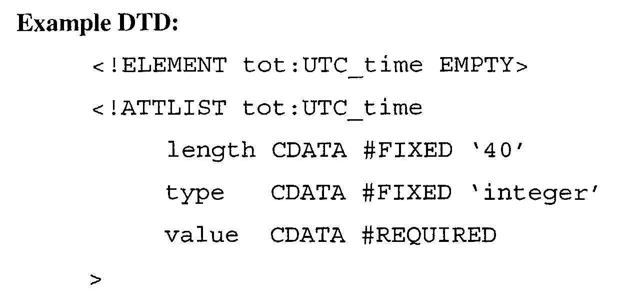

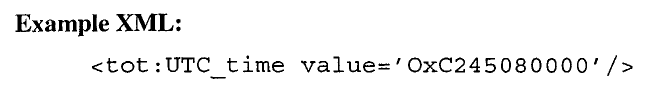

### The descriptor element type

The descriptor element models any MPEG / DVB descriptor as described in the relevant standard and may also be used to model non-standard descriptors.

A MPEG / DVB descriptor comprises a header and a body. The header contains the following fields:
- descriptor_tag (8 bits): this identifies the type of the descriptor. Values for different descriptor types are defined in the MPEG / DVB standards.
- descriptor_length (8 bits): this gives the size of the descriptor in bytes (excluding the header)

The body comprises the information carried by the descriptor.

A descriptor is modeled by an XML element having two attributes:
- type='descriptor'
- value

The value attribute field corresponds to the descriptor_tag field in the descriptor header. During the generation of the descriptor header, the descriptor_tag field is set to the value of the value attribute. The value of the descriptor_length field is obtained by calculating the size the descriptor body in bytes.

The descriptor body is modeled by one or more child elements.

### The looplength element type

When generating a loop based on a looplength element, the table generator adds a field giving the length of the loop in bytes before generating the body of the loop.

The looplength element has two attributes:
- type='looplength'
- length

The length attribute represents the size in bits of the loop length field to be generated. The loop length field holds the length (in bytes) of all child elements belonging to the looplength element. Its value is calculated and filled in during generation process once the length of the loop has been determined.

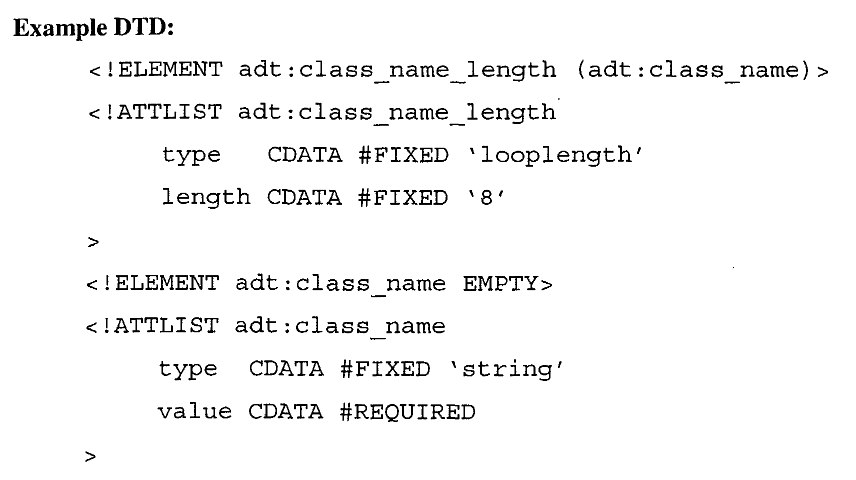

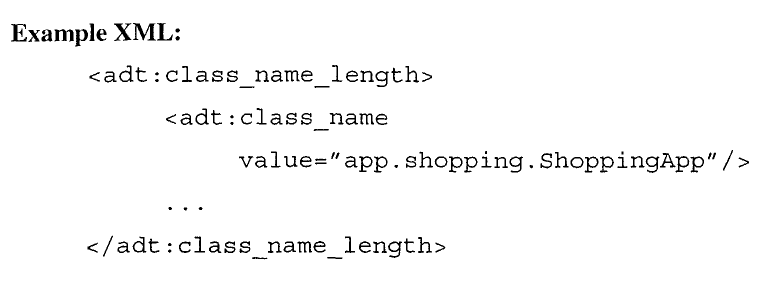

### The loopnumber element type

Loops are modeled using the loopnumber element in the same way as has been described above, with the exception that instead of a loop length field, a loop number field is added to the generated table giving the number of child elements of the loopnumber element.

Like looplength, the loopnumber element has two attributes:
- type='loopnumber'
- length

The length attribute represents the length in bits of the loop number field.

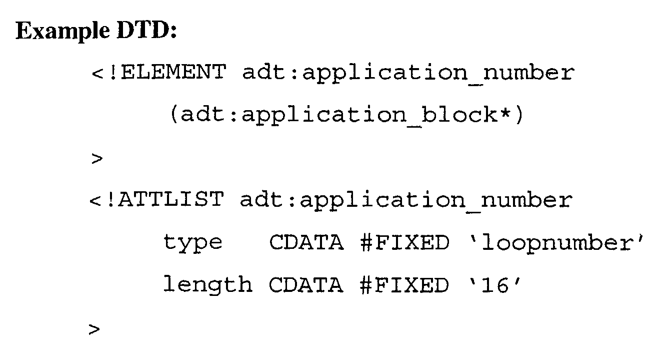

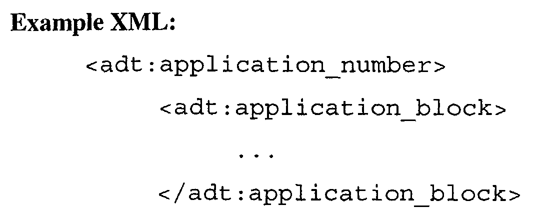

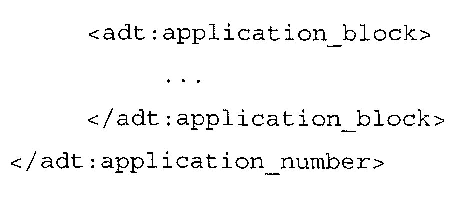

### The block element type

The block element is used to group a set of elements in a block. The elements can be elementary or composite.

A block element has only one attribute:
- type='block'

### The binaryfile element type

The binaryfile element can be used to specify a binary file to be included where it is not easy or convenient to include data in the XML table document itself.

The binaryfile element has two attributes:
- type='binaryfile'
- value

The value attribute contains the path and filename of the binary file. The table generator includes the contents of the binary file at the current position in the generated table.

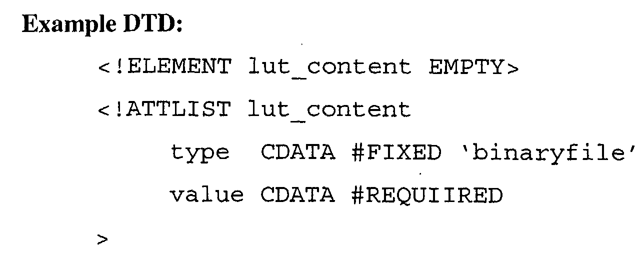

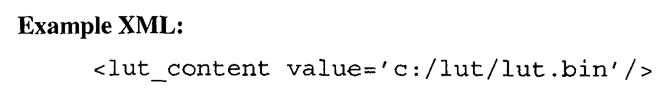

### The Offset element type

Some tables contain a field holding a relative offset to another field. This offset is given as a value relative to the start of the private data in the table. A label is used to identify a field in the XML table document for referencing in this way.

To declare a label, an XML comment starting with the keyword label is used. This tags the following line with the label given. In the following example the tag is labell:

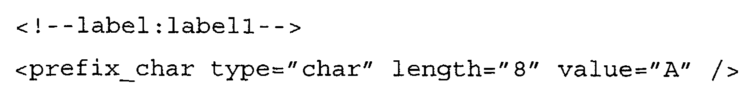

A subsequent reference to this label in an offset element references the labeled element.

An offset element has two attributes:
- type='offset'
- value

The value attribute contains the name of the label.

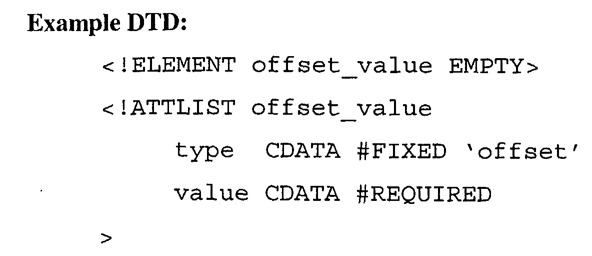

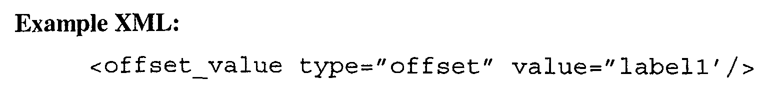

### Example

An example of an XML DTD representing a DVB table will now be given along with an example of an XML table document encoding an actual table. The example is based on the DVB Time Offset Table (TOT).

The DVB standard TOT table structure is given below (as defined in ETSI EN300468).

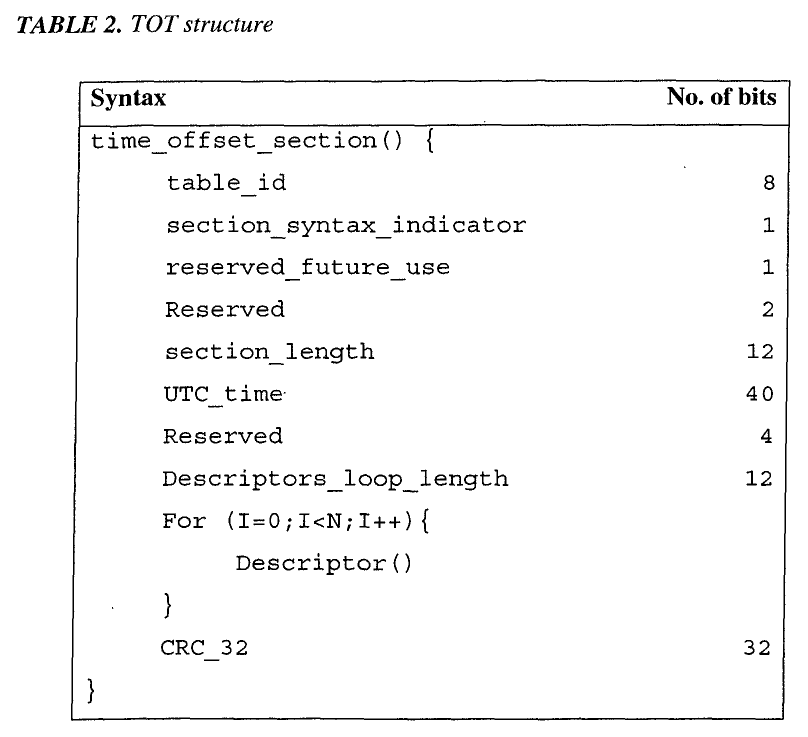

The TOT may contain one or more local time offset descriptors in the descriptor loop; this descriptor is defined in the DVB standard as follows:

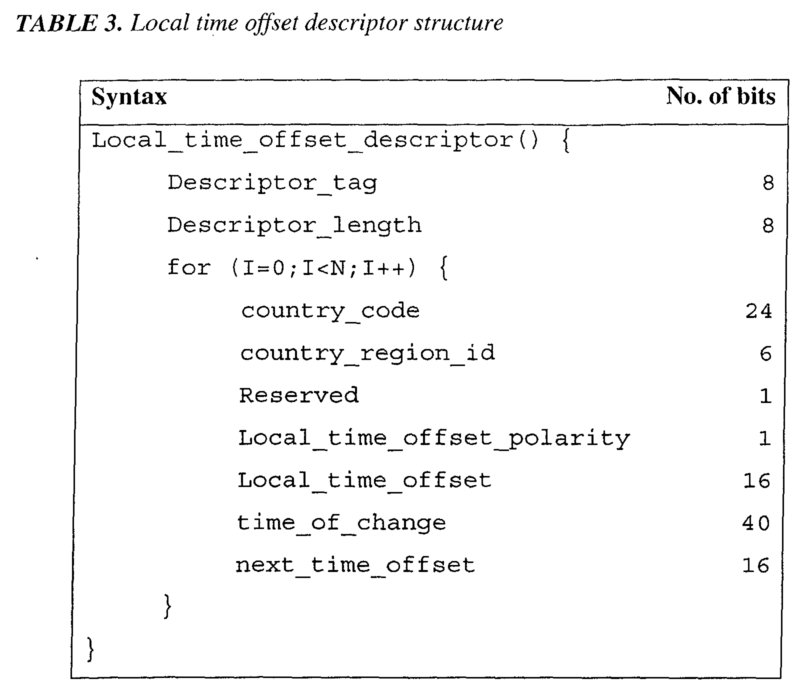

The TOT is represented in the XML DTD as a tot element having type attribute fixed to 'table' and a tid attribute holding the table identifier (table_id), which in the case of the TOT is fixed by the DVB standards to the value 0x73.

The remainder of the TOT fields are contained in the tot:private_data element, a child element of the tot element:

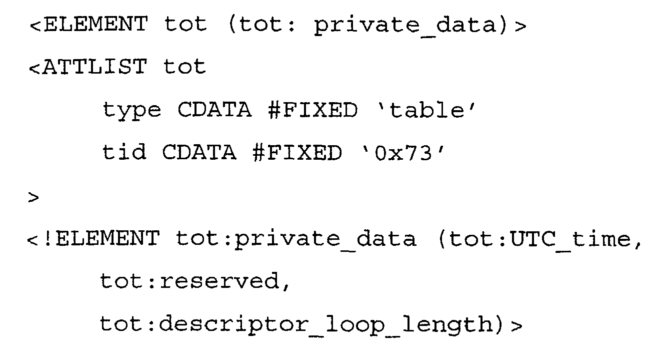

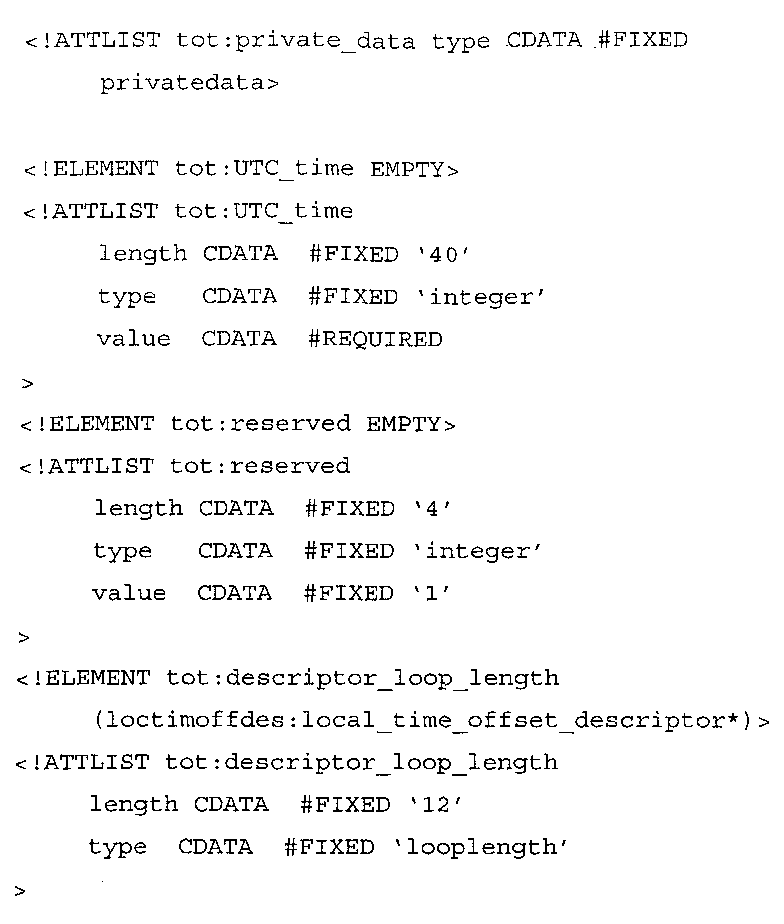

The local time offset descriptor is represented as shown below:

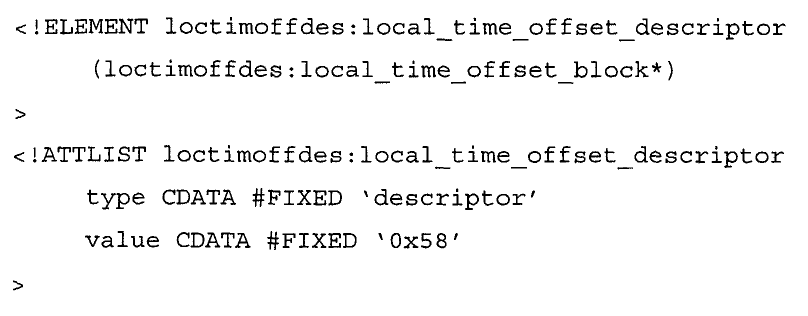

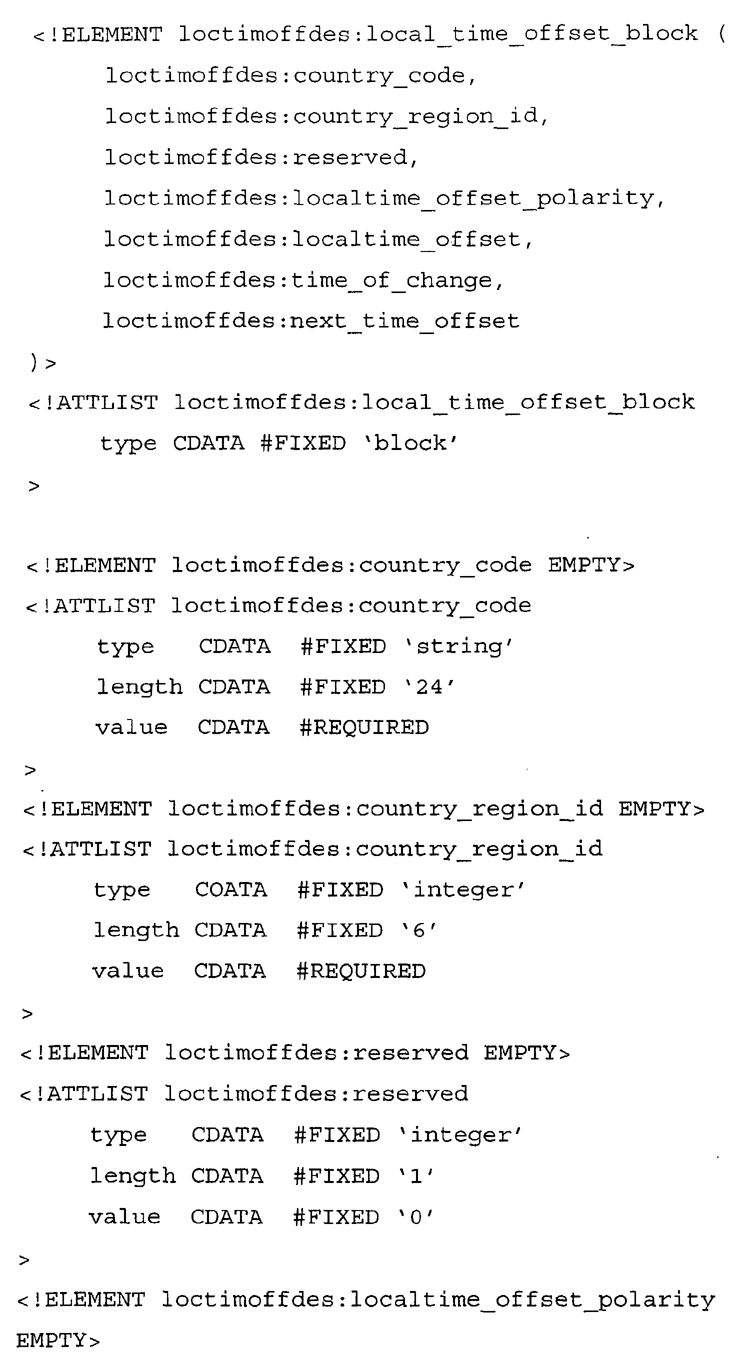

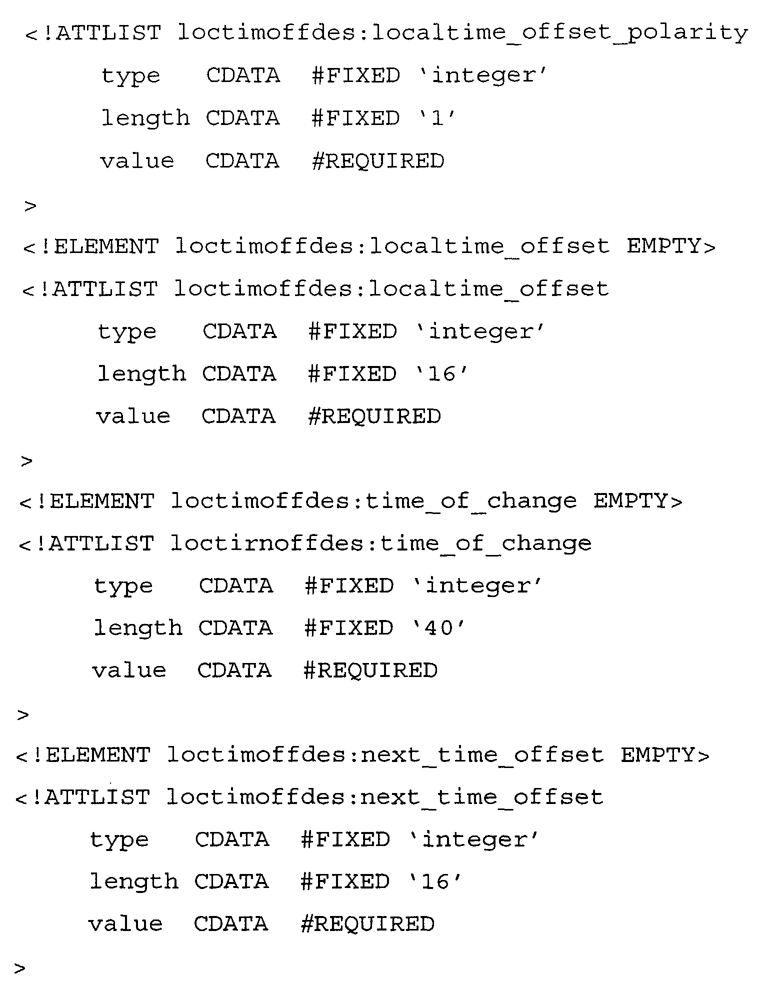

The following gives a brief example of a TOT encoded in XML according to the above DTD (assuming the DTD is stored in the file specified in the DOCTYPE declaration):

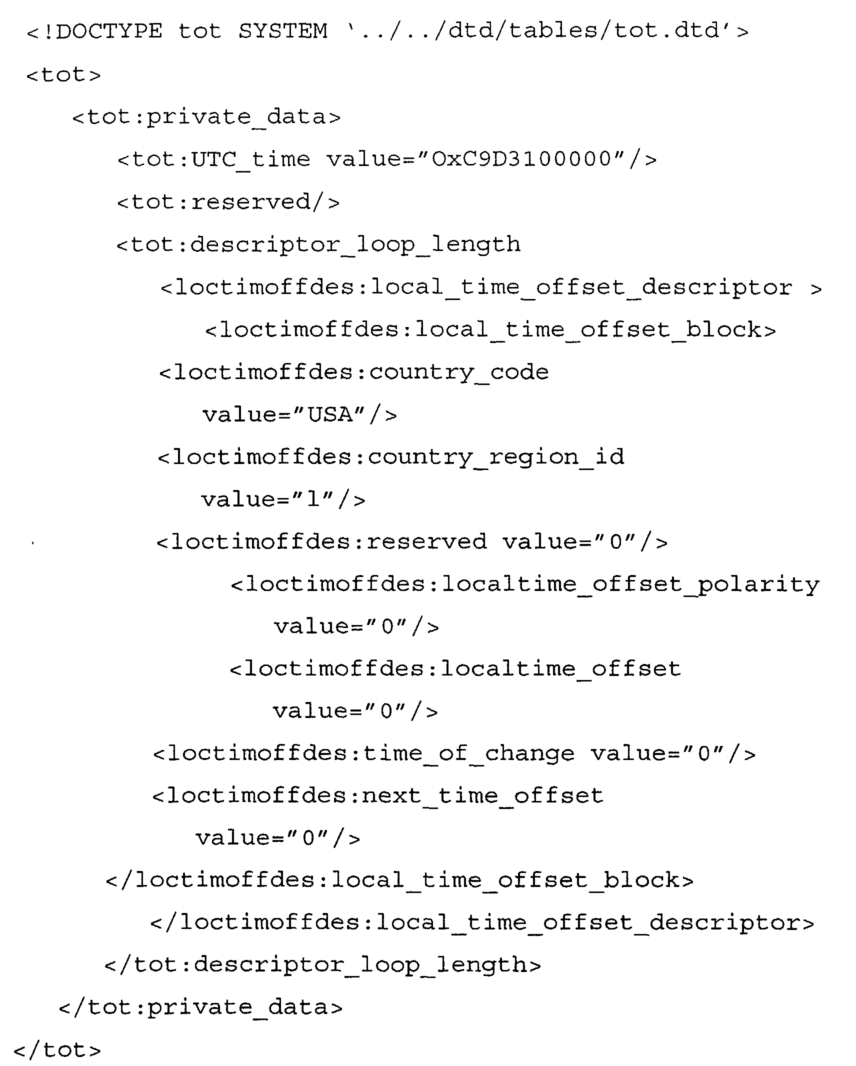

Other MPEG / DVB tables and descriptors, as well as non-standard / proprietary tables and descriptors, can be represented by similarly constructed DTDs.

### Table generation

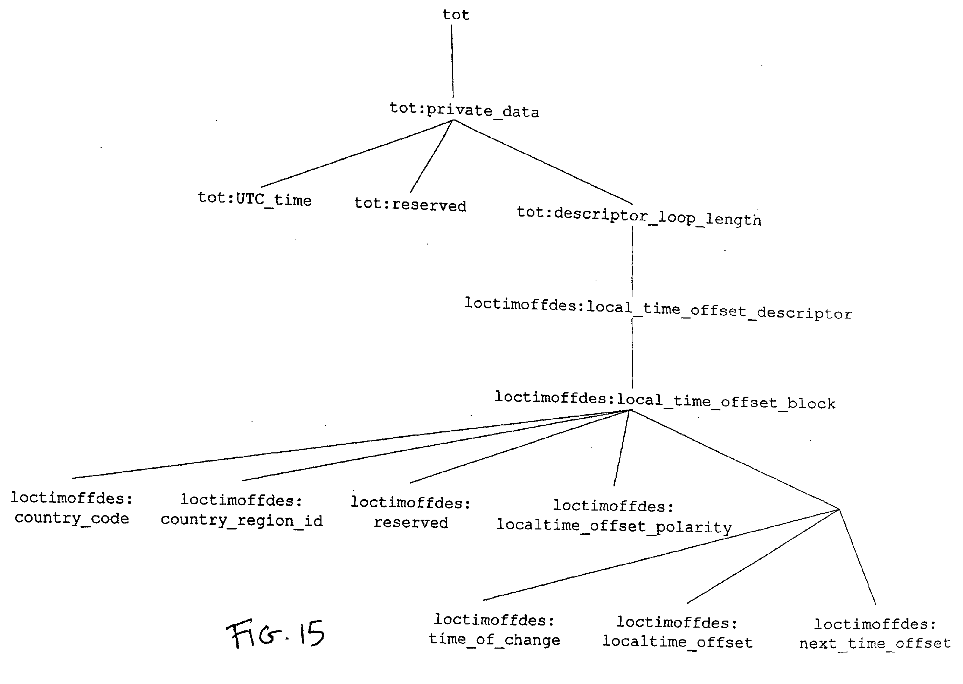

Returning to Figure 14, The XML processor 7410 parses the XML table document 7420 using appropriate DTD 7416, which is found via the DOCTYPE declaration at the start of the XML table document. The XML processor creates the document object model (DOM) from the XML document and DTD. During this process attribute values are set either from the DTD, in the case where an attribute value is fixed or has a default value specified in the DTD, or from the XML table document itself, in the case where attribute values are explicitly supplied there. Figure 15 shows a representation of a possible object tree for the TOT example given above.

With reference to Figure 14, MPEG / DVB output stage 7412 generates the final MPEG / DVB table and stores it in MPEG / DVB table file 7418. If the MPEG / DVB table is split into sections, then one file is created per section. To generate the table, the object tree is traversed top to bottom and left to right, that is to say in the same order in which the elements appear in the XML source. Starting with the root element, which is the element representing the table as a whole (type="table"), fields corresponding to that element (if any) are first added to the (initially empty) output. Then the children of that element are processed in like manner. When all children of an element have been processed, generation continues with the element's next sibling. This is summarised by the following pseudo-code:

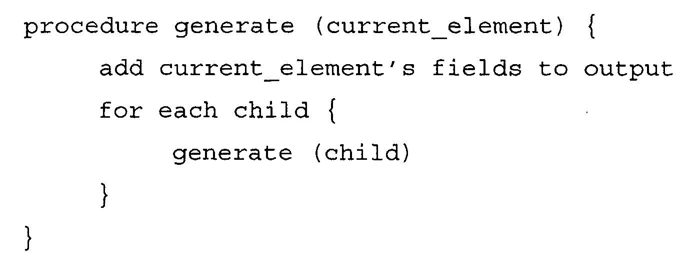

The generation of the entire table is then effected by a call to the generate procedure, passing the root element (that representing the table itself) to the procedure as the current_element parameter.

How fields are added to the output depends on the type of element being processed, as given by the type attribute.

### type="table"

This will always be the first element processed during generation. MPEG / DVB tables always begin with the 8-bit table_id field, and accordingly, this is also the first byte of the output generated by the table generator. Its value is obtained from the tid attribute of the table element.

If the table element contains a tidext attribute, then a long header is generated; and a crc32 value is added at the end of the table. If the tidext attribute is absent, a short header is generated; and a crc32 value is added only if a further attribute crc32 is present in the table element and has the value 'true'.

### type="headerext"

If a header extension element is present then the additional header fields it defines are repeated on each table section generated.

### type="descriptor"

As has already been described, MPEG / DVB descriptors begin with the two fields descriptor_tag and descriptor_length, both defined by the MPEG /DVB standards as being 8 bits long. The descriptor_tag is obtained from the value attribute of the descriptor element and added to the output. The value of descriptor_length is calculated from the lengths of the component fields of the descriptor. This may be achieved by first inserting a placeholder for the descriptor_length field (for example the value 0x00), and replacing this with the actual value once the body of the descriptor has been generated, as then, its size will be known.

### type="looplength"

Generation of a looplength element comprises adding a field to the output giving the size in bytes of the loop body, and generating the body itself. As described above for the descriptor element, this may be achieved by adding a placeholder to the output; generating the loop body; and replacing the placeholder with the actual loop body size. The size the loop length field (and hence the placeholder) in bits is given by the length attribute of the looplength element.

### type="loopnumber"

For loops encoded by a loopnumber element, a field giving the number of child elements of the loopnumber element is added to the output. This is typically the number of iterations of the loop and is known once the XML has been parsed. It can therefore be added to the output before generation of the loop body occurs. Its size in bits is given by the length attribute of the loopnumber element.

### type="block"

No fields are generated for a block element as this simply represents a logical grouping of fields. Generation therefore proceeds immediately with the child elements of the block element.

### type="integer" type="string", type="char", type="bytes"

For each elementary element which represents a field to be generated in the MPEG table, the value given by the value attribute (either from the XML or DTD) is encoded in the number of bits given by the length attribute (from the DTD) dependent on the data type specified by the type attribute (from the DTD). The resulting bits are added to the output.

If the total amount of data contained in the table exceeds the maximum section length, then the table is split into multiple sections. The maximum section length may be specified in the service plan generator and passed to the table generator as a parameter. Generally, private data is simply split across table sections at the section size limit; this behaviour can however be modified using the cutting attribute as has already been described.

The one or more generated table sections are stored as binary files accessible by the simulation system for the purposes of creating the (simulated) MPEG transport stream.

It will be appreciated that although many of the techniques, methods and software tools presented have been described in the context of a application broadcast testing system, particularly one in which application broadcast is simulated, they are nonetheless more widely applicable. For example, many of the principles of the present invention are equally applicable in the context of broadcast testing not involving simulation or involving partial simulation and in the context of live television broadcast; and software techniques and tools could easily be adapted for use in such a context.

The precise details of the implementation of the various functions described above, and their distribution between hardware and software, are a matter of choice for the implementor and will not be described in detail. It is, however, noted that dedicated integrated circuits capable of performing the operations required in the receiver/decoder are commercially available or can be readily designed, and these can be used as the basis for a hardware accelerator, or more preferably modified to produce a dedicated hardware accelerator, to implement various of the operations required, thereby reducing the processing power required to run the software. However, the operations required may be implemented in software if sufficient processing power is available.

The modules and other components have been described in terms of the features and functions provided by each component, together with optional and preferable features. With the information given and specifications provided, actual implementation of these features and the precise details are left to the implementor. As an example, certain modules could be implemented in software, preferably written in the C programming language and preferably compiled to run on the processor used to run the application; however, some components may be run on a separate processor, and some or all components may be implemented by dedicated hardware.

The above modules and components are merely illustrative, and the invention may be implemented in a variety of ways, and, in particular, some components may be combined with others which perform similar functions, or some may be omitted in simplified implementations. Hardware and software implementations of each of the functions may be freely mixed, both between components and within a single component.

It will be readily understood that the functions performed by the hardware, the computer software, and such like are performed on or using electrical and like signals. Software implementations may be stored in ROM, or may be patched in FLASH.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A service plan editor for creating and editing a service plan relating to a digital transmission system, comprising
a) a user interface for receiving user input, the user input comprising data relating to the digital transmission system;
b) means for compiling the service plan from the data; and
c) means for outputting the service plan.

2. A service plan editor according to Claim 1, wherein the compiling means is adapted to format the service plan in a predetermined format.

3. A service plan editor according to Claim 2, wherein the user interface is adapted to receive data relating to a digital transmission system having a given structure, the compiling means being adapted to format the service plan in a structure related to said given structure.

4. A service plan editor according to Claim 3, wherein said given structure is hierarchical, the compiling means being adapted to format the service plan in a hierarchical structure related to said given hierarchical structure.

5. A service plan editor according to any of Claims 2 to 4, wherein the compiling means comprises an encoder for encoding the service plan using a markup language.

6. A service plan editor according to any of the preceding claims, wherein the user interface is adapted to receive data relating to a digital transmission system having a given structure, the user interface being adapted to arrange the data in a structure related to said given structure for presentation to a user.

7. A service plan editor according to Claim 6, wherein said given structure is hierarchical, the user interface comprising a hierarchical interface element adapted to arrange the data in a hierarchical structure related to said given hierarchical structure for presentation to a user.

8. A service plan editor according to any of the preceding claims, wherein the user interface is adapted to receive data relating to a digital transmission system, the digital transmission system having a given structure and being intended for the transmission of content, the user interface being adapted to generate a first view for receiving data relating to said given structure and a second view for receiving data relating to the content.

9. A service plan editor according to any of the preceding claims, wherein the user interface comprises default or fixed data for presentation to a user, the user interface being adapted to allow user selection of such data for inclusion in the service plan.

10. A service plan editor according to any of the preceding claims, further comprising means for storing the service plan.

11. A transmission control data generator, comprising means for receiving a service plan relating to a digital transmission system; and means for generating transmission control data from the service plan.

12. A transmission control data generator according to Claim 11, adapted to generate transmission control data for use in transmission testing.

13. A transmission control data generator according to Claim 11 or 12, wherein the generating means is adapted to generate the transmission control data in the form of a data structure.

14. A transmission control data generator according to Claim 13, wherein the data structure is a table.

15. A transmission control data generator according to Claim 13 or 14, wherein the generating means is adapted to generate the transmission control data in the form of a set of such data structures.

16. A transmission control data generator according to any of Claims 13 to 15, wherein the generating means is adapted to generate the transmission control data in the form of a suite of such data structures, the suite being a substantially complete implementation of the service plan.

17. A transmission control data generator according to any of Claims 11 to 16, wherein the receiving means comprises a user interface.

18. A transmission control data generator according to any of Claims 11 to 17, wherein the receiving means comprises a service plan editor as claimed in any of Claims 1 to 10.

19. A transmission control data generator according to any of Claims 11 to 18, wherein the generating means comprises an encoder adapted to encode the transmission control data in a directly usable format.

20. A transmission control data generator according to Claim 19, wherein the encoder is adapted to encode the transmission control data in a format suitable for insertion into a transport stream.

21. A transmission control data generator according to any of Claims 11 to 20, wherein the generating means comprises an encoder adapted to encode the transmission control data in an intermediate format suitable for further processing.

22. A transmission control data generator according to Claim 21, wherein the encoder is adapted to encode the transmission control data using a markup language.

23. A transmission control data generator according to any of Claims 11 to 22, wherein the generating means comprises a converter for converting transmission control data encoded in an intermediate format into a directly usable format.

24. A transmission control data generator according to Claim 23, wherein the generating means comprises a converter for converting transmission control data encoded using a markup language into transmission control data suitable for insertion into a transport stream.

25. A transmission control data generator according to any of the preceding claims, further comprising means for storing information relating to the structure or configuration of the digital transmission system.

26. A transmission control data generator according to Claim 25, wherein the storing means comprises a Windows(TM) Registry.

27. A converter, comprising means for converting transmission control data relating to a digital transmission system in a first format into transmission control data in a second format.

28. A converter according to Claim 27, adapted to convert transmission control data for use in transmission testing.

29. A converter according to Claim 27 or 28, wherein the first format uses a markup language.

30. A converter according to any of Claims 27 to 29, wherein the second format is a directly usable format.

31. A converter according to any of Claims 27 to 30, wherein the converting means comprises:
a) means for receiving transmission control data in the first format; and
b) means for generating transmission control data in the second format.

32. A converter according to any of Claims 27 to 31, wherein the second format is a data structure.

33. A converter according to Claim 32 as dependent on Claim 31, wherein the receiving means is adapted to receive a size specifier and a value specifier; and wherein the generating means is adapted to generate a field in the data structure having a size specified by the size specifier and a value specified by the value specifier.

34. A converter according to Claim 33, wherein the receiving means is further adapted to receive a type specifier, the generating means being adapted to generate the field in dependence on the type specifier.

35. A converter according to any of Claims 32 to 34, wherein the data structure is a table.

36. A converter according to any of Claims 32 to 35, wherein the generating means is adapted to generate the transmission control data in the form of a table having at least one table section.

37. A converter according to Claim 36, further comprising means for receiving data defining the mapping of a table into at least one table section, the generating means being adapted to generate said at least one table section in dependence on the data.

38. A converter according to Claim 37, wherein the data comprises a parameter defining a maximum section length for a table section; the generating means being adapted to generate said at least one table section in dependence on the size of the table and the maximum section length defined by the parameter.

39. A data file comprising transmission control data for a digital transmission system marked up using a markup language.

40. A data file according to Claim 39, comprising an element representing a field in a transmission control table.

41. A data file according to Claim 40, wherein the field has a type, a size and a value; and wherein the element comprises at least one attribute, each respective attribute representing one of the type of the field, the size of the field and the value of the field.

42. A data file according to any of Claims 39 to 41, further comprising an element representing a group of at least one field in a transmission control table,

43. A data file according to any of Claims 39 to 42, further comprising an element representing a transmission control table, the element preferably comprising an attribute holding a table identifier of the transmission control table.

44. A document type definition comprising a definition of a document type for representing a transmission control table using a markup language.

45. A document type definition according to Claim 44, further comprising a definition of an element representing a field in the transmission control table.

46. A document type definition according to Claim 45, wherein the field has a type, a size and a value; and wherein the element definition comprises at least one definition of an attribute, each respective attribute representing one of the type of the field, the size of the field and the value of the field.

47. A document type definition according to any of Claims 44 to 46, further comprising a definition of an element representing a group of at least one field in the transmission control table.

48. A document type definition according to any of Claims 44 to 47, further comprising a definition of an element representing the transmission control table, said element definition preferably comprising a definition of an attribute for holding a table identifier of the transmission control table.

49. A data file according to any of Claims 39 to 43, further comprising a document type definition as claimed in any of Claims 44 to 48 or a reference to such a document type definition.

50. A converter according to any of Claims 27 to 38, wherein the first format is a format for a data file as claimed in any of Claims 39 to 43 and 49.

51. A converter according to Claim 50, further comprising means for receiving a data file as claimed in any of Claims 39 to 43 and 49 or a document type definition as claimed in any of Claims 44 to 48.

52. A transmission control data generator according to any of Claims 19 and 20 to 26 when dependent on Claim 19, wherein the encoder is adapted to create a data file as claimed in any of claims 39 to 43 and 49.

53. A transmission control data generator according to any of Claims 11 to 26 and 52, further comprising a converter as claimed in any of claims 27 to 38, 50 and 51.

54. A signal tangibly embodying a data file as claimed in any of Claims 39 to 43 and 49 or a document type definition as claimed in any of Claims 44 to 48.

55. A computer-readable medium having stored thereon a data file as claimed in any of Claims 39 to 43 and 49, a document type definition as claimed in any of Claims 44 to 48 or a signal as claimed in Claim 54.

56. A transmission testing system, comprising means for receiving a service plan relating to a digital transmission system; and means for generating transmission control data from the service plan.

57. A transmission testing system according to Claim 56, further comprising a transmission control data generator as claimed in any of Claims 11 to 26, 52 and 53.

58. A transmission testing system according to Claim 56 or 57, further comprising a service plan editor as claimed in any of Claims 1 to 10.

59. A transmission testing system according to any of Claims 56 to 58, further comprising a converter as claimed in any of Claims 27 to 38, 50 and 51.

60. A transmission testing system according to any of Claims 56 to 59, further comprising a transport stream generator adapted to generate a transport stream incorporating the transmission control data generated by the transmission control data generator.

61. A transmission testing system according to Claim 60, further comprising means for receiving application information relating to an application to be transmitted, wherein the transport stream generator is adapted to add the application information or the application to the transport stream.

62. A transmission testing system according to Claim 61, wherein the application information comprises an application file forming part of the application or a specifier specifying the location of such an application file.

63. A method of creating or editing a service plan relating to a digital transmission system, comprising the steps of:
a) receiving user input comprising data relating to the digital transmission system;
b) compiling the service plan from the data; and
c) outputting the service plan.

64. A method of generating transmission control data, comprising receiving a service plan relating to a digital transmission system; and generating transmission control data from the service plan.

65. A method of generating transmission control data relating to a digital transmission system, comprising converting transmission control data in a first format into transmission control data in a second format.

66. A computer program product comprising a service plan editor as claimed in any of Claims 1 to 10; a transmission control data generator as claimed in any of Claims 11 to 26, 52 and 53; a converter as claimed in any of Claims 27 to 38, 50 and 51; a transmission testing system as claimed in any of Claims 56 to 62; a data file as claimed in any of Claims 39 to 43 and 49 or a document type definition as claimed in any of Claims 44 to 48.

67. A computer program product adapted to carry out a method as claimed in any of Claims 63 to 65.

68. A computer readable medium having stored thereon a computer program product as claimed in Claim 66 or 67.

69. A signal tangibly embodying a computer program product as claimed in Claim 66 or 67.

70. A method of transmitting a signal, wherein the signal is as claimed in Claim 54 or 69.
